# EUROPEAN PATENT SPECIFICATION

(11) **EP 3 871 860 B1**
(45) Date of publication and mention of the grant of the patent: **13.03.2024**
(21) Application number: 20793548.7
(22) Date of filing: 24.07.2020
(51) Int. Cl.: B29C 64/165, B29C 64/236, B22C 9/02, B33Y 30/00

(54) **PRINTING ASSEMBLY AND 3D PRINTING APPARATUS**
DRUCKANORDNUNG UND 3D-DRUCKVORRICHTUNG
ENSEMBLE D'IMPRESSION ET APPAREIL D'IMPRESSION 3D

(30) Priority: 16.01.2020 CN 202010045621; 16.01.2020 CN 202020090431 U; 16.01.2020 CN 202010045636; 16.01.2020 CN 202020090456 U; 16.01.2020 CN 202020070335 U; 30.04.2020 CN 202010365331
(43) Date of publication of application: 01.09.2021
(73) Proprietor: Kocel Intelligent Machinery Limited, Yinchuan, Ningxia 750021 (CN)
(72) Inventor: PENG, Fan, Ningxia 750021 (CN); LIU, Yi, Ningxia 750021 (CN); ZHOU, Zhijun, Ningxia 750021 (CN); REN, Jianxi, Ningxia 750021 (CN); HE, Jiejun, Ningxia 750021 (CN); YANG, Baoning, Ningxia 750021 (CN); MA, Xi, Ningxia 750021 (CN); MAI, Hengjia, Ningxia 750021 (CN)
(74) Representative: Vitina, Maruta
(86) International application number: PCT/CN2020/104051
(87) International publication number: WO 2021/143092

(56) References cited:
- CN-A- 105 499 577
- CN-A- 105 729 796
- CN-A- 106 915 081
- CN-A- 106 915 081
- CN-A- 108 515 698
- CN-A- 108 515 698
- CN-A- 111 169 003
- CN-A- 111 169 004
- US-A1- 2019 061 250
- US-B2- 10 335 991

## Description

The present application claims the benefit of priorities to the following six Chinese patent applications,
1) Chinese Patent Application No. 202010045621.7, titled "3D PRINTING DEVICE", filed with the China National Intellectual Property Administration on January 16, 2020;
2) Chinese Patent Application No. 202020090431.2, titled "3D PRINTING DEVICE", filed with the China National Intellectual Property Administration on January 16, 2020;
3) Chinese Patent Application No. 202010045636.3, titled "PRINTING ASSEMBLY AND 3D PRINTING DEVICE", filed with the China National Intellectual Property Administration on January 16, 2020;
4) Chinese Patent Application No. 202020090456.2, titled "PRINTING ASSEMBLY AND 3D PRINTING DEVICE", filed with the China National Intellectual Property Administration on January 16, 2020;
5) Chinese Patent Application No. 202020070335.1, titled "SAND SUPPLY DEVICE AND 3D PRINTING DEVICE", filed with the China National Intellectual Property Administration on January 16, 2020; and
6) Chinese Patent Application No. 202010365331.0, titled "3D PRINTING DEVICE", filed with the China National Intellectual Property Administration on April 30, 2020.

### FIELD

The present application relates to the technical field of additive manufacturing, and in particular to a printing assembly and a 3D printing device.

### BACKGROUND

In the technical field of additive manufacturing, the working principle of a 3D printing device is that a layer of raw materials is laid by a material-dropping mechanism, and then a layer of product outline is printed by a printing mechanism, so that the whole product is printed by cycling the above process and stacking layer by layer. Finally, the product is removed and removed and cleaned by a carrying working box, and then the printing is continued with continuous supply of other working boxes. Although 3D printing technology can realize one-time forming of products with complex structure, due to the limitation of printing principle, the printing speed is relatively limited, which affects printing efficiency. From CN 108 515 698 A a 3DP device is known which comprises a device frame having an upper layer frame, a lower layer frame and a middle layer linking frame. A lifting platform and a work box are arranged in the lower layer frame. A discharging mechanism and a printing mechanism are arranged in the upper layer frame, and a powder supply mechanism is arranged on the upper side of the discharging mechanism. From CN 106 915 081 A a printing material laying synchronizing mechanism for a 3D printing rapid prototyping machine is known. The printing material laying synchronizing mechanism comprises an X-axis drive guide rail and a material laying device which are mounted on a Y-axis drive track. A Y-axis sliding platform is mounted on each of a Y-axis first track and a Y-axis second track through a sliding block. A horizontal mounting plate is arranged across between the two Y-axis sliding platforms. From CN 105 729 796 A a feeding device of 3D printing equipment is known. The feeding device comprises a solid material feeding pipeline and a liquid material feeding pipeline, wherein one end of the solid material feeding pipeline is connected with a solid material groove, and the other end of the solid material feeding pipeline is connected with a material mixing tank. From US 2019/061250 A1 a build material source container for use in a material management station of a 3D printer is known. The source container defines a substantially enclosed space for holding build material and has an aperture for build material ingress and egress. At least part of the build material source container is formed from an electrically conductive material. The conductive material portion of the build material source container is connectable to Earth to discharge static electricity generated within the build material source container.

### SUMMARY

In view of this, it is necessary to provide a printing assembly with high printing efficiency and a 3D printing device aiming at the problem of low printing efficiency of the 3D printing device in the prior art.

A 3D printing device according to the invention is defined in claim 1. Preferred embodiments are set out in the dependent claims.

According to the 3D printing device provided by the present application, the material-dropping guide rails, the printing guide rails, the printing mechanisms and the material-dropping mechanisms of the printing assembly are integrally arranged on the support frame, and the printing mechanisms and the material-dropping mechanisms can synchronously reciprocate along the material-dropping guide rails, thereby effectively improving the printing efficiency of the 3D printing device. By integrating the working box and the lifting component into a whole and movably arranging the working box and the lifting component inside the support frame, the positioning times of the working box and the lifting component can be reduced, the positioning requirements are lowered, and the horizontal stability of the bottom plate of the working box can be ensured without being influenced by the positioning of the lifting component and the bottom plate of the working box, which can achieve rapid and continuous printing while ensuring more efficient printing accuracy. With the above configuration, the structure is compact, the space occupation is small, and the cost is low, which is convenient for daily use.

### BRIEF DESCRIPTION OF THE DRAWINGS

Figure 1 is a schematic perspective view of a printing assembly according to an embodiment;
Figure 2 is a schematic perspective view of the printing assembly according to another embodiment;
Figure 3 is a schematic perspective view of the printing assembly according to another embodiment;
Figure 4 is a schematic perspective view of the printing assembly according to another embodiment;
Figure 5 is a schematic perspective view of the printing assembly according to another embodiment;
Figure 6 is a schematic perspective view of a 3D printing device according to an embodiment;
Figure 7 is a schematic perspective view of a working box mechanism according to an embodiment;
Figure 8 is a schematic structural view of a lifting component in a state according to an embodiment;
Figure 9 is a schematic structural view of the lifting component in another state according to an embodiment;
Figure 10 is a schematic perspective view of the working box mechanism according to another embodiment;
Figure 11 is an isometric structure view of the 3D printing device according to an embodiment of the present application;
Figure 12 is a schematic view of Figure 11 with the upper cover opened;
Figure 13 is a schematic view of integration of a material-dropping mechanism and a printing mechanism;
Figure 14 is a side view of Figure 13;
Figure 15 is a schematic diagram of the principle of a gas source device;
Figure 16 is a schematic structural view of a working box and a lifting mechanism;
Figure 17 is a schematic structural view of a cleaning platform;
Figure 18 is a sectional view of the cleaning platform;
Figure 19 is a schematic view of a feeding device;
Figure 20 is a schematic view of a liquid material system;
Figure 21 is a schematic workflow diagram of a mixing platform;
Figure 22 is a schematic workflow diagram of the 3D printing device;
Figure 23 is a side view of a sand supply device from a viewpoint according to an embodiment of the present application;
Figure 24 is a side view of the sand supply device from another viewpoint according to an embodiment of the present application;
Figure 25 is a schematic structural view of a raw material bin of the sand supply device according to an embodiment of the present application;
Figure 26 is a schematic structural view of the raw material bin of the sand supply device according to another embodiment of the present application; and
Figure 27 is a sectional view of the sand supply device according to an embodiment of the present application.

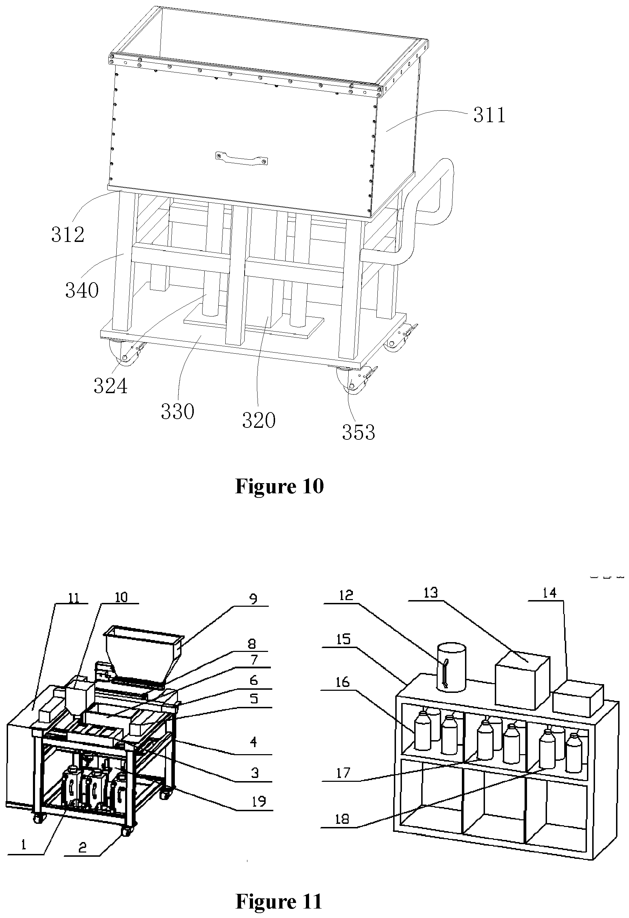

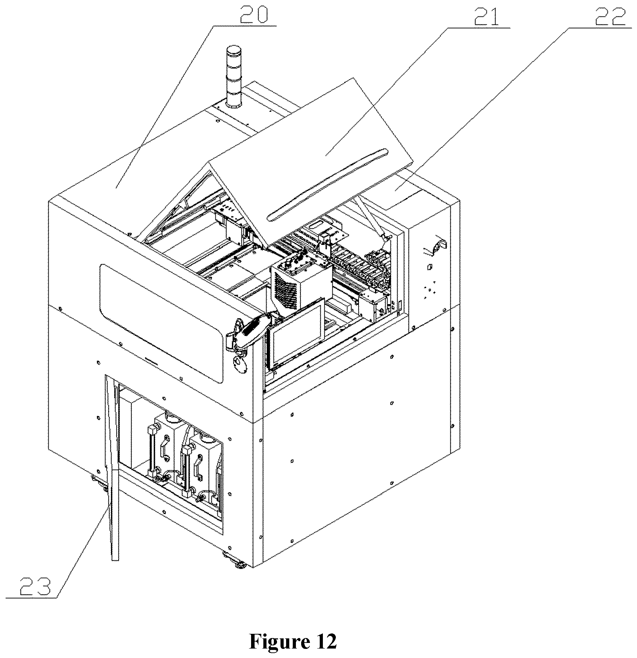

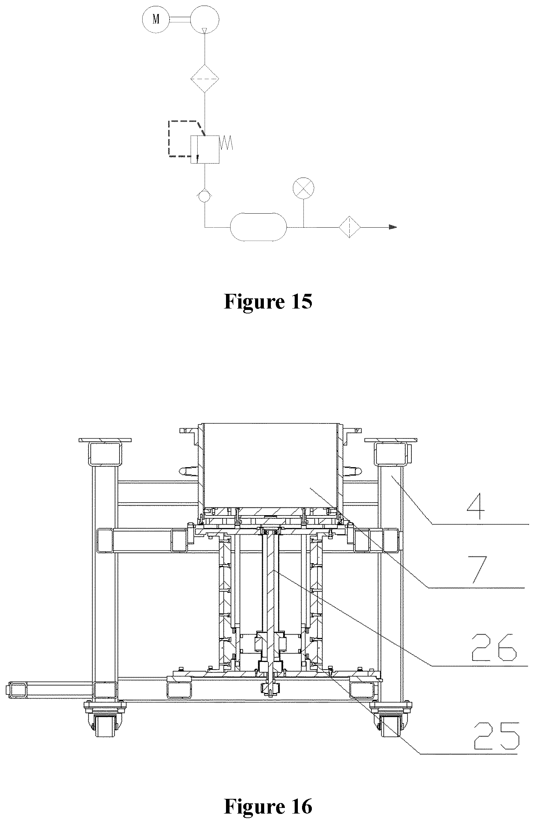

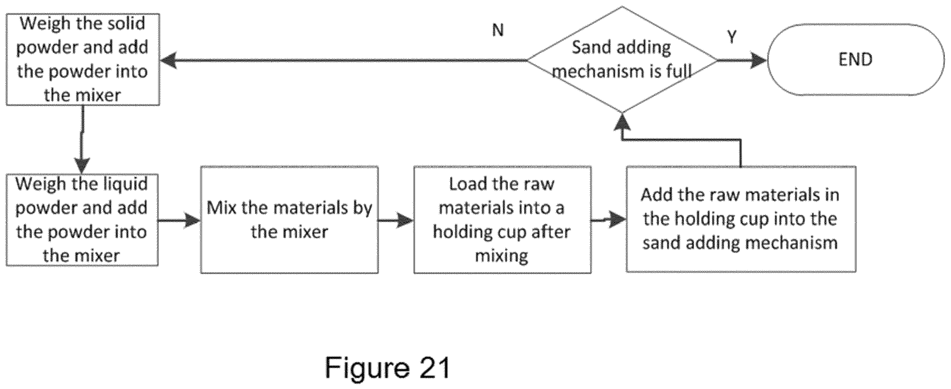

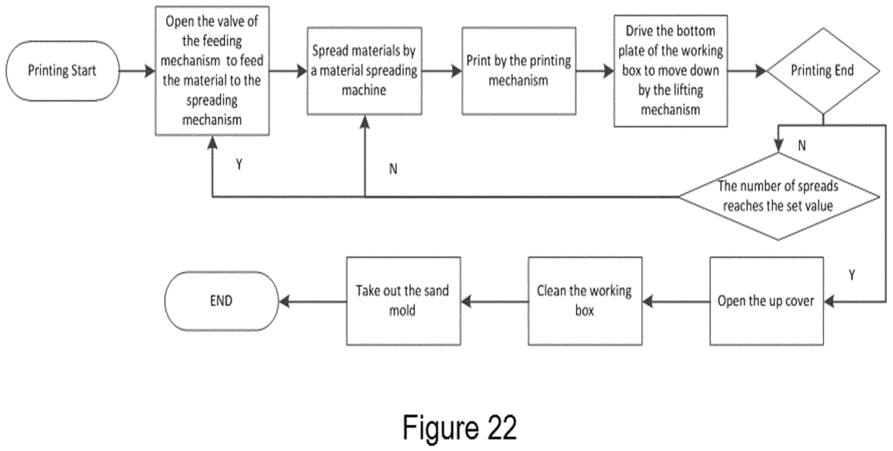

Referential numerals in Figures 11 to 22 are as follows:

| | | | |
|---|---|---|---|
| 1 | liquid material system | 2 | caster |
| 3 | cleaning position | 4 | support frame |
| 5 | material-dropping guide rail | 6 | printing guide rail |
| 7 | working box | 8 | material-dropping mechanism |
| 9 | feeding device | 10 | printing mechanism |
| 11 | electrical cabinet | 12 | holding cup |
| 13 | mixing machine | 14 | electronic scale |
| 15 | supporting body | 16 | first liquid material |
| 17 | second liquid material | 18 | third liquid material |
| 19 | lifting mechanism | 20 | outer protective box |
| 21 | upper cover | 22 | feeding upper cover |
| 23 | liquid material barrel door | 24 | connecting plate |
| 25 | guide sliding block | 26 | screw rod |
| 27 | cleaning bracket | 28 | screen |
| 29 | material receiving groove | 30 | handle |
| 31 | sand storage hopper | 32 | valve |

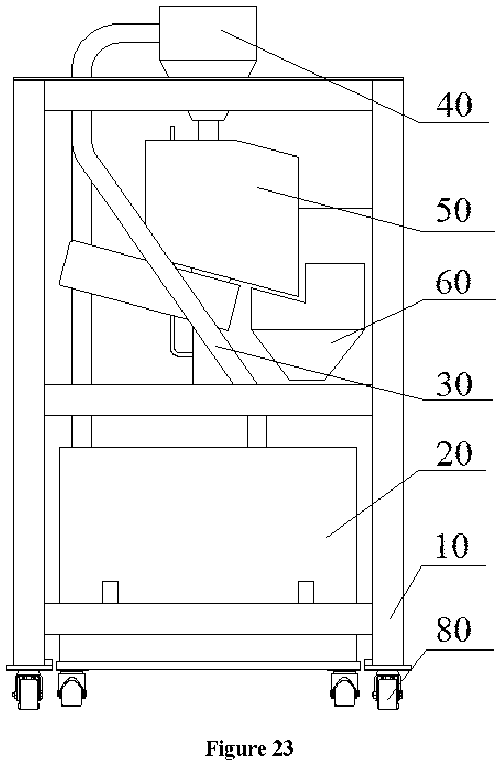

Referential numerals in Figures 23 to 27:

| | | | |
|---|---|---|---|
| 10 | frame | 11 | frame body |
| 12 | position-limiting block | 13 | guide pulley |
| 20 | raw material bin | 30 | material conveying device |
| 40 | quota device | 50 | mixing device |
| 60 | buffer device | 70 | liquid quota device |
| 80 | mobile device. | | |

### DETAILED DESCRIPTION OF THE EMBODIMENTS

In order to facilitate the understanding of the present application, the present application will be described in full details with reference to the relevant drawings. The preferred embodiments of the present application are shown in the drawings. However, the present application can be implemented in many different forms and is not limited to the embodiments described herein. On the contrary, the purpose of providing these embodiments is to make the disclosure of the present application more through and comprehensive.

It should be noted that, when an element is referred to as being "arranged" on another element, it may be directly on another element or there may be an intermediate element. When an element is considered to be "connected" to another element, it may be directly connected to another element or an intermediate element may be present at the same time. As used herein, the terms "vertical", "horizontal", "left", "right", "top", "bottom", "bottom end", "top end" and similar expressions are for the purpose of illustration only, and do not imply an only embodiment.

Unless otherwise defined, all technical and scientific terms used herein have the same meanings as commonly understood by those skilled in the technical field of the present application. The terms used in the specification of the present application are only for the purpose of describing specific embodiments, and are not intended to limit the present application. The term "and/or" as used herein includes any and all combinations of one or more related listed items.

In an embodiment, a printing assembly includes symmetrically arranged material-dropping guide rails, multiple printing guide rails, multiple material-dropping mechanisms and multiple printing mechanisms. The multiple printing guide rails and the multiple material-dropping mechanisms are respectively arranged between the two symmetrically arranged material-dropping guide rails. At least one printing guide rail is slidably provided with one printing mechanism.

According to the invention, the 3D printing device includes a printing assembly, where the printing assembly includes symmetrically arranged material-dropping guide rails, multiple printing guide rails, multiple material-dropping mechanisms and multiple printing mechanisms. The multiple printing guide rails and the multiple material-dropping mechanisms are respectively arranged between the two symmetrically arranged material-dropping guide rails. At least one printing guide rail is slidably provided with one printing mechanism Further details of the invention are defined in claim 1.

According to the printing assembly and the 3D printing device, multiple printing guide rails, multiple material-dropping mechanisms and multiple printing mechanisms are integrally arranged between the symmetrically arranged material-dropping guide rails. Thus, the multiple material-dropping mechanisms and the multiple printing mechanisms can realize synchronous reciprocating movement along the material-dropping guide rails, so that continuous printing can be realized, so as to effectively improve the printing efficiency and greatly save the space occupied by the device.

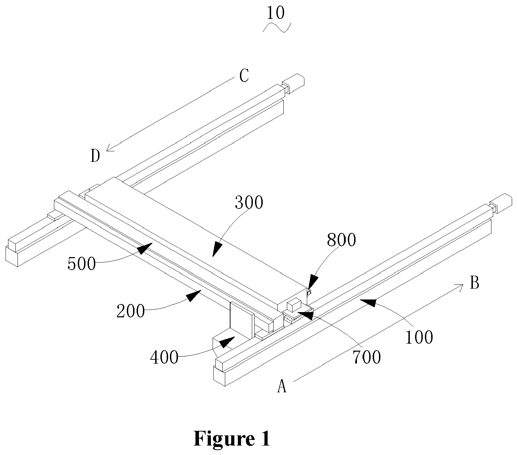

In order to further understand the inventive concept of the printing assembly, the printing assembly will be described with specific embodiments. Referring to Figure 1, a printing assembly 10 includes symmetrically arranged material-dropping guide rails 100, multiple printing guide rails 200, multiple material-dropping mechanisms 300 and multiple printing mechanisms 400. The multiple printing guide rails 200 and the multiple material-dropping mechanisms 300 are respectively arranged between the two symmetrically arranged material-dropping guide rails 100. At least one printing guide rail 200 is provided with one printing mechanism 400.

Specifically, the material-dropping guide rails 100 and the printing guide rails 200 are both motion modules, and the specific structures thereof can be referred to the transplanting motion module of the printing head and the sand spreading machine used in the 3D printer in the prior art, which will not be described in detail in this embodiment. The specific number of the printing guide rails 200 and the material-dropping mechanisms 300 is determined according to actual printing requirements. In an embodiment, two symmetrically arranged material-dropping guide rails 100 are arranged on the support frame of the printing device at intervals. In an embodiment, the printing guide rails 200 are connected with the material-dropping mechanisms 300, and are arranged between the two symmetrically arranged material-dropping guide rails 100. In an embodiment, the printing guide rails 200 and the material-dropping mechanisms 300 are arranged between the two symmetrically arranged material-dropping guide rails 100 at intervals. That is, the printing guide rails 200 and the material-dropping mechanisms 300 can be connected with each other or spaced apart from each other, and no matter what the setting mode is, because the printing guide rails 200 and the material-dropping mechanisms 300 can realize synchronous reciprocating movement along with the material-dropping guide rails, the mounting type is not specifically limited in this embodiment. In this way, by starting the symmetrically arranged material-dropping guide rails 100, the material-dropping mechanisms 300 mounted on the material-dropping guide rails 100 can be driven to move synchronously with the printing guide rails 200. After the printing stroke in one direction is completed, the material-dropping mechanisms 300 and the printing guide rails 200 can move in an opposite direction synchronously by controlling the material-dropping guide rails 100 to move in the opposite direction. That is to say, by controlling the material-dropping guide rails 100 to move forward and backward in a certain stroke range, the circular reciprocating movement of the material-dropping mechanisms 300 and the printing guide rails 200 can be realized. In this process, multiple material-dropping mechanisms and multiple printing guide rails can be mounted according to actual printing requirements, so that printing and material-dropping can be carried out synchronously, and the whole printing process can be continuously carried out, thereby effectively improving printing efficiency. It should be noted that, in a case that two or more printing guide rails 200 are provided, it should be ensured that at least one printing guide rail 200 is slidably provided with one printing mechanism 400, so that the printing mechanism 400 can move along the printing guide rails 200 to realize printing in a direction perpendicular to the sand-falling direction. That is to say, some printing guide rails 200 may not be provided with the printing mechanism 400, which can be explained with reference to the following embodiments.

Referring to Figure 1 again, according to the invention, at least one crossbeam 500 is arranged between the two material-dropping guide rails 100, and each of the crossbeams 500 is correspondingly mounted with one printing guide rail 200. That is, the crossbeam 500 is a structure supporting the printing guide rail 200. In this way, by setting the crossbeam 500, the printing guide rail 200 can be mounted more stably, and the influence of mutual movement between the printing guide rail 200 and the material-dropping guide rail 100 can be effectively avoided. It should be noted that, in an arrangement not covered by the claims, the printing guide rail 200 can be directly arranged between the two material-dropping guide rails 100, that is, there is, in this arrangement, no need to provide the crossbeam for support. However, the provision of the crossbeam can ensure that the printing guide rail and the material-dropping guide rail are not influenced by each other in the movement.

Referring to Figure 1 again, in an embodiment, one crossbeam 500 is slidably arranged between the two material-dropping guide rails 100, and one material-dropping mechanism 300 is provided on a side of the crossbeam 500 away from the printing guide rail 200. In this embodiment, the printing mechanism 400 is integrated with the material-dropping mechanism 300 through the crossbeam 500, and the printing mechanism 400 reciprocates along the material-dropping guide rail 100 along with the material-dropping mechanism 300. That is, in normal operation, the material-dropping mechanism 300 moves along the AB direction to drop materials. In this process, the printing mechanism 400 moves along with the material-dropping mechanism 300, and the printing mechanism 400 does not print, and the printing mechanism 400 prints while the printing mechanism 400 moves along the CD direction along with the material-dropping mechanism 300. That is, the material-dropping mechanism 300 performs material-dropping operation during the forward process, and then performs printing operation during the backward process.

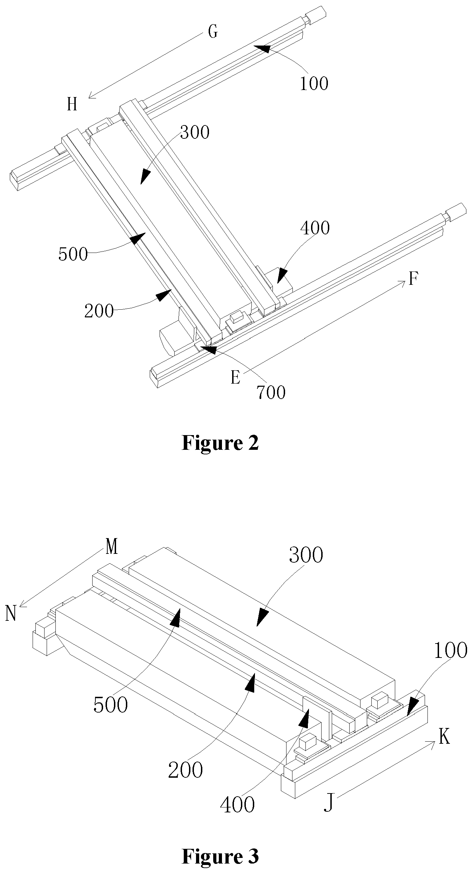

Referring to Figure 2, in an embodiment, two crossbeams 500 are slidably arranged between the two material-dropping guide rails 100, the material-dropping mechanism 300 is arranged between the two crossbeams 500, and one printing mechanism 400 is provided at one side of each crossbeam 500 away from the material-dropping mechanism 300. In this embodiment, the printing mechanisms 400 are respectively arranged on two sides of the material-dropping mechanism 300 and integrated on the same material-dropping guide rail 100, and the two printing mechanisms 400 reciprocate along the material-dropping guide rail 100 together with the material-dropping mechanism 300. That is, in normal operation, when the material-dropping mechanism 300 moves along the EF direction to drop materials, the left printing mechanism 400 moves together with the material-dropping mechanism 300 to print, and when the material-dropping mechanism 300 moves in the GH direction to drop materials, the right printing mechanism 400 moves together with the material-dropping mechanism 300 to print. That is, printing is performed while the material-dropping is performed during the forward process of the material-dropping mechanism 300, and printing is still performed during the backward process. In this way, continuous printing can be realized without waiting for material-dropping to finish, and the printing efficiency is relatively high.

Referring to Figure 3, in an embodiment, one crossbeam 500 is slidably arranged between the two material-dropping guide rails 100, and one material-dropping mechanism 300 is mounted on each of two sides of the crossbeam 500. In this embodiment, by respectively providing one material-dropping mechanism 300 on each side of the crossbeam 500 on which the printing mechanism 400 is mounted and integrating the material-dropping mechanisms 300 and the printing mechanism 400 on the same material-dropping guide rail 100, the printing mechanism 400 reciprocates along the material-dropping guide rail 100 together with the material-dropping mechanisms 300. That is, in normal operation, when the right material-dropping mechanism 300 moves along the JK direction to drop materials, the printing mechanism 400 moves together with the right material-dropping mechanisms 300 to print, and when the left material-dropping mechanism 300 moves along the MN direction to drop materials, the printing mechanism 400 moves together with the left material-dropping mechanism 300 to print. That is, by providing one set of printing mechanism 400 and two sets of material-dropping mechanisms 300, continuous printing can be realized in the round trip, and the material-dropping is executed by two material-dropping mechanisms, which can facilitate continuous printing without interruption due to feeding.

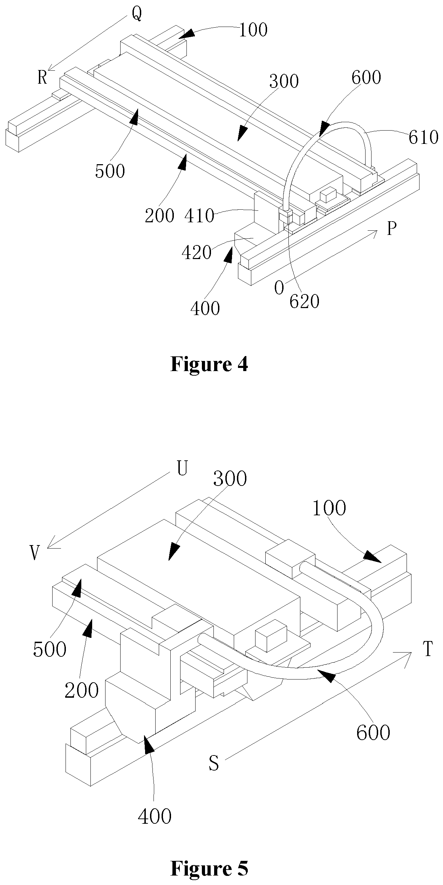

Referring to Figure 4, in an embodiment, two crossbeams 500 are slidably arranged between the two material-dropping guide rails 100, the material-dropping mechanism 300 is arranged between the two crossbeams 500, and an arched gantry mechanism 600 is bridged between the two crossbeams 500 along the vertical direction, where the printing mechanism 400 is mounted on one of the crossbeams 500 and is able to slide to the other crossbeam 500 through the arched gantry mechanism 600. In an embodiment, the arched gantry mechanism 600 includes an arched sliding rail 610 and connecting blocks 620 movably arranged at two ends of the arched sliding rail, and the connecting blocks 620 are movably connected with the printing mechanism 400. The printing mechanism 400 includes a sliding block 410 and a printing head 420 arranged on the sliding block, and the sliding block 410 is movably mounted on the printing guide rail 200. In a preferred embodiment, the sliding block 410 is rotatably connected with the connecting blocks 620. Specifically, the sliding block 410 is mounted on the printing guide rail 200 and drives, together with the printing guide rail 200, the printing head to reciprocate along the printing guide rail. When the printing head is required to be transferred to another printing guide rail through the arched gantry mechanism 600, it is preferred to detach the sliding block 410 from the printing guide rail and adjust the mounting angle between the sliding block 410 and the connecting block 620, so that the printing head slides along the arched sliding rail 610 to the printing guide rail on the other side. Similarly, the sliding block is mounted on the printing guide rail on the other side, and then the printing head moves along the printing guide rail on the other side. In this embodiment, by providing the arched gantry mechanism 600 above the material-dropping mechanism 300, the printing mechanism 400 reciprocates along the material-dropping guide rail 100 along with the material-dropping mechanism 300. That is, during normal operation, after the material-dropping mechanism 300 and the printing mechanism 400 print one layer in the OP direction synchronously, the printing mechanism 400 is transferred to the other side of the material-dropping mechanism 300 through the arched gantry mechanism 600, and when the material-dropping mechanism 300 and the printing mechanism 400 return in the QR direction, material-dropping and printing are still carried out synchronously, which greatly improves the efficiency of the device. That is, one set of printing mechanism 400 can be mounted to the two printing guide rails 200 through the arched gantry mechanism 600, thereby realizing printing during the round trip.

Referring to Figure 5, in an embodiment, two crossbeams 500 are slidably arranged between the two material-dropping guide rails 100, the material-dropping mechanism 300 is arranged between the two crossbeams 500, and the arched gantry mechanism 600 is bridged between two ends of the two crossbeams 500 on one side in the horizontal direction, where the printing mechanism 400 is mounted on one of the crossbeams 500 and is able to slide to the other crossbeam 500 through the arched gantry mechanism 600. In this embodiment, by providing the arched gantry mechanism 600 at one side of the material-dropping mechanism 300, the printing mechanism 400 reciprocates along the material-dropping guide rail 100 along with the material-dropping mechanism 300. In a preferred embodiment, the printing mechanism 400 includes a printing head, a first connecting part and a second connecting part, where one end of the first connecting part is connected with the printing head, the first connecting part is movably arranged on the printing guide rail, the second connecting part is integrated with the first connecting part, and the arched gantry mechanism is connected with the second connecting part. In this way, by bridging the arched gantry mechanism 600 between the two crossbeams 500, one end of the arched gantry mechanism is connected with the printing mechanism and another end of the arched gantry mechanism is connected with the crossbeam. When the printing head is driven to slide out from the printing guide rail on one side crossbeam, the print head will slide to the other crossbeam on the other side along the arched gantry mechanism arranged in the horizontal direction. Further, the first connecting part is then slidably connected with the printing guide rail on the other crossbeam on the other side, and the printing mechanism can print on the other side. That is, during normal operation, after the material-dropping mechanism 300 and the printing mechanism 400 print one layer in the ST direction synchronously, the printing mechanism 400 is transferred to the other side of the material-dropping mechanism 300 through the arched gantry mechanism 600, and when the material-dropping mechanism 300 and the printing mechanism 400 return in the UV direction, material-dropping and printing are still carried out synchronously, which greatly improves the efficiency of the device.

With reference to Figure 1, in order to reduce the amplitude influence of the material-dropping mechanism 300 on the printing mechanism 400 during movement, in an embodiment, sliding blocks 700 are provided at two ends of each crossbeam 500 and two ends of each material-dropping mechanism 300, and each sliding block 700 is slidably connected with the material-dropping guide rail 100. That is, double sliding blocks are provided at the material-dropping guide rail 100, which are respectively connected with the material-dropping mechanism 300 and the crossbeam 500, so as to reduce the amplitude influence of the material-dropping mechanism 300 on the printing mechanism 400 during movement, thereby improving the printing accuracy.

With reference to Figure 1, in order to improve the curing speed of printed products, in an embodiment, a heating element 800 is provided at one side of each material-dropping mechanism 300. The heating element 800 may be an electric heating coil or an electric heating block. In this way, by starting the heating element 800, the product formed at a lower end of the material-dropping mechanism can be cured quickly, thereby improving the printing efficiency.

In an embodiment, a 3D printing device includes the printing assembly according to any one of the above embodiments.

According to the printing assembly and the 3D printing device, multiple printing guide rails 200, multiple material-dropping mechanisms 300 and multiple printing mechanisms 400 are integrally arranged between symmetrically arranged material-dropping guide rails 100. Thus, each material-dropping mechanism 300 and each printing mechanism 400 can realize synchronous reciprocating movement along the material-dropping guide rails 100, so that continuous printing can be realized, so as to effectively improve the printing efficiency and greatly save the space occupied by the device.

According to the invention, the 3D printing device includes a support frame, a printing assembly integrally arranged on the support frame and a working box mechanism. The printing assembly includes symmetrically arranged material-dropping guide rails, multiple printing guide rails, multiple material-dropping mechanisms and multiple printing mechanisms. The multiple printing guide rails and the multiple material-dropping mechanisms are arranged between two symmetrically arranged material-dropping guide rails, and at least one printing guide rail is provided with one printing mechanism. The two material-dropping guide rails are arranged on two symmetrical sides of the support frame. The working box mechanism includes a working box and a lifting component which are integrally arranged, where the lifting component is configured to move the bottom plate of the working box up and down along the vertical direction, and the working box and the lifting component are movably arranged inside the support frame.

According to the 3D printing device, the material-dropping guide rails, the printing guide rails, the printing mechanisms and the material-dropping mechanisms of the printing assembly are integrally arranged on the support frame, and the printing mechanisms and the material-dropping mechanisms can synchronously reciprocate along the material-dropping guide rails, thereby effectively improving the printing efficiency of the 3D printing device. By integrating the working box and the lifting component into a whole and movably arranging the working box and the lifting component inside the support frame, the positioning times of the working box and the lifting component can be reduced, the positioning requirements are lowered, and the horizontal stability of the bottom plate of the working box can be ensured without being influenced by the positioning of the lifting component and the bottom plate of the working box, which can achieve rapid and continuous printing while ensuring more efficient printing accuracy. The problem of low precision 3D printing products due to the limitation of connection mode of the working box is solved.

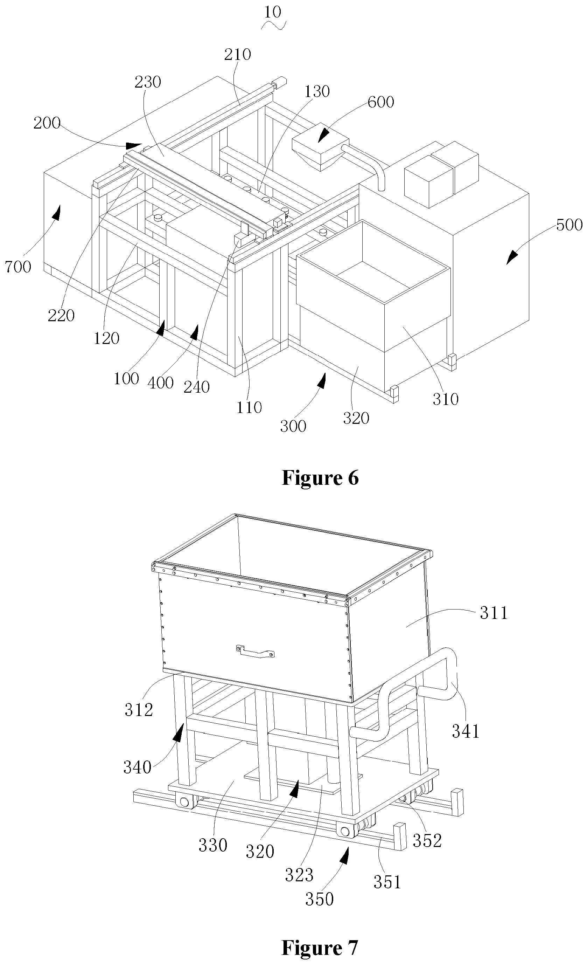

In order to further understand the inventive concept of the 3D printing device, the 3D printing device will be described with reference to specific embodiments. Referring to Figure 6, a 3D printing device 10 includes a support frame 100, a printing assembly 200 and a working box mechanism 300 which are integrated on the support frame. The printing assembly 200 includes symmetrically arranged material-dropping guide rails 210, multiple printing guide rails 220, multiple material-dropping mechanisms 230 and multiple printing mechanisms 240. The multiple printing guide rails 220 and the multiple material-dropping mechanisms 230 are arranged between the two material-dropping guide rails 210, and at least one printing guide rail 220 is provided with one printing mechanism 240. The two material-dropping guide rails 210 are arranged on two symmetrical sides of the support frame 100. The working box mechanism 300 includes a working box 310 and a lifting component 320 which are integrally arranged, where the lifting component 320 is configured to move the bottom plate of the working box 310 up and down along the vertical direction, and the working box 310 and the lifting component 320 are movably arranged inside the support frame 100.

Specifically, in an embodiment, referring to Figure 6 again, the support frame 100 includes multiple struts 110 and connecting rods 120, and the struts 110 are arranged at intervals and connected with each other through the connecting rods 120. Preferably, the support frame 100 is provided with three struts along the X axis direction and four struts along the Y axis direction. In this way, the structure of the support frame 100 is relatively more stable, and can effectively save equipment materials. Further, material-dropping guide rails 210 are respectively provided at the symmetrical two sides of the support frame 100. Specifically, two material-dropping guide rails 210 are arranged at top ends of the struts 110 of the support frame 100 in the Y-axis direction. Spraying materials are stored in the printing mechanism 240 to form a product outline. The material-dropping mechanism 230 stores the base material for laying the product layer, for example, the base material is sand. In an embodiment, an inlets and an outlet are provided at two symmetrical sides of the support frame 100. The inlet and outlet are formed by two struts spaced apart. The width of the working box mechanism 300 is required to be less than the width of the inlet and outlet, so that the working box mechanism 300 can slide into the interior of the support frame from one side of the support frame 100, which facilitates the printing mechanism and the material-dropping mechanism to print products on the working box, and then slide out to the other side of the support frame after printing, or enter and slide out from the same side. The moving path of the working box mechanism can be determined according to the actual process arrangement, which is not specifically limited in this embodiment. The working box of the working box mechanism 300 is a mechanism configured to bear printed products, and the lifting component is a mechanism configured to drive the bottom plate of the working box. When the printing mechanism cooperates with the material-dropping mechanism to print, the product is formed on the working box, and the height of the bottom plate of the working box is gradually reduced by the lifting component, so that the printed products can be stacked on the bottom plate of the working box gradually.

In an embodiment, the working box 310 is integrally arranged on the top of the lifting component 320. In this way, by integrating the lifting component 320 and the working box 310 into an integrated structure, it is easy to realize the rapid and integral transfer of the working box mechanism. Compared with the method of only transferring the working box in the prior art, the printing waiting time can be effectively saved. That is to say, when the working box and the lifting component after printing are moved out as a whole, the empty working box and the lifting component can be placed in position immediately, and the positioning requirements are reduced, which can ensure the horizontal stability of the working box bottom plate without being affected by the positioning of the lifting component and the working box bottom plate, so as to realize rapid and continuous printing while ensuring more efficient printing accuracy.

In an embodiment, further referring to Figure 7, the working box mechanism 300 further includes a mounting platform 330, and the lifting component 320 is arranged on the mounting platform 330. By providing the mounting platform 330, the lifting component 320 is reliably support. In an embodiment, the working box 310 includes a housing 311 and a bottom plate 312 movably arranged in the housing, and the bottom plate 312 is fixedly connected with the lifting component 320. In this way, by arranging the housing 311, the overflow of printed products on the bottom plate 312 is reduced, and the production space is maintained clean and sanitary. The fixed connection between the bottom plate 312 and the lifting component 320 is helpful to determine the positioning between the bottom plate and the lifting component and to ensure the smoothness and stability of the bottom plate surface, so as to avoid the instability of the bottom plate surface due to the need for multiple positioning when the bottom plate and the lifting component are connected, thereby ensuring the printing accuracy of the product.

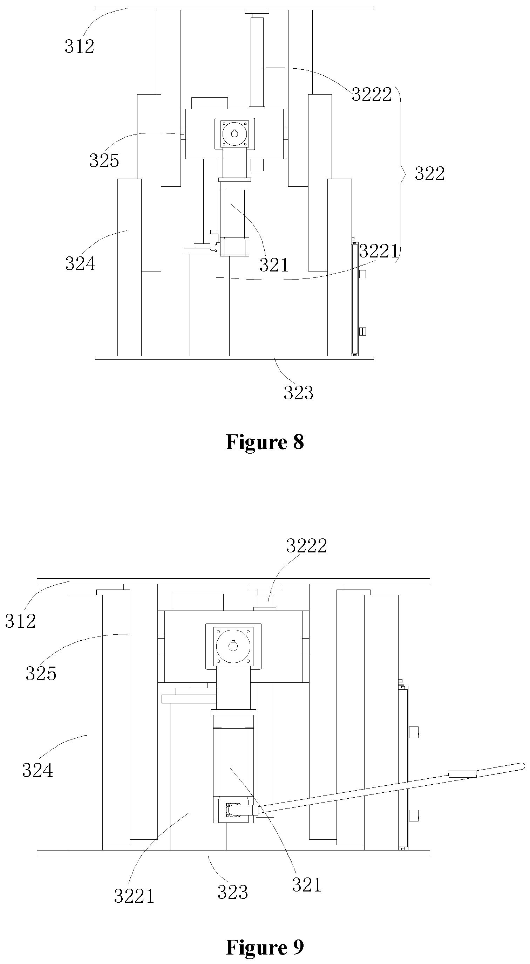

In an embodiment, referring to Figure 8 and Figure 9 together, the lifting component 320 includes a transmission mechanism 321 and a motion mechanism 322 connected with each other, and a fixing plate 323 supporting the transmission mechanism and the motion mechanism. In an embodiment, the transmission mechanism 321 includes a cylinder or a motor driving device. In an embodiment, the motion mechanism 322 includes a hydraulic telescopic device or a lead screw telescopic device. The motion mechanism 322 includes a lower lifting mechanism 3221 and an upper lifting mechanism 3222 connected with the transmission mechanism 321, where the lower lifting mechanism 3221 is connected with the fixing plate 323 and the upper lifting mechanism 3222 is connected with the bottom plate 312 of the working box. When the bottom plate of the working box needs to be raised, the transmission mechanism 321 is started, and the upper lifting mechanism 3222 and the lower lifting mechanism 3221 extend at the same time, and when the bottom plate of the working box needs to be lowered, the upper lifting mechanism 3222 and the lower lifting mechanism 3221 contract at the same time. In this way, the lower lifting mechanism 3221 and the upper lifting mechanism 3222 are extended and contracted by the driving of the transmission mechanism 321, and then the bottom plate of the working box is driven to rise or fall.

Preferably, the lifting component 320 further includes multiple balance lifting columns 324 which are slidably connected with each other and multiple sliding blocks 325 mounted on the transmission mechanism 321, and each sliding block 325 is connected with one balance lifting column 324. The balance lifting column 324 close to the bottom plate of the working box is connected with the bottom plate of the working box, and the balance lifting column 324 close to the fixing plate 323 is connected with the fixing plate 323. For example, the balance lifting column 324 connected with the fixing plate and the balance lifting column 324 connected with the bottom plate of the working box are directly and slidably connected with each other. This kind of structure is similar to tubular columns nested with each other, which can be extended or contracted with respect to each other. For example, a third balance lifting column is further arranged between the balance lifting column 324 connected with the fixing plate and the balance lifting column 324 connected with the bottom plate of the working box. The number of the third balance lifting column can be increased according to the movement stroke of the motion mechanism. Preferably, the sliding blocks are arranged on two symmetrical sides of the top of the transmission mechanism 321, and each sliding block is cooperatively connected with one corresponding balance lifting column. When the bottom plate of the working box needs to be raised, the motion mechanism 322 is driven to rise by starting the transmission mechanism 321, the height position of the transmission mechanism is raised, and the balance lifting column connected with the sliding block is lifted, while the other balance lifting columns connected with the balance column are lifted one by one, so as to support the whole bottom plate of the working box. In the same way, when the bottom plate of the working box needs to be lowered, the transmission mechanism drives the balance lifting columns to approach each other and retract, thereby synchronously lowering the height position of the bottom plate of the working box.

In order to support the working box more stably, in a preferred embodiment, further referring to Figure 7, the mounting platform 330 is provided with a bracket 340, and the bracket 340 is connected with the housing 311 of the working box. Specifically, the bracket 340 is mounted on a bottom edge of the housing. The specific connection manner may be a fixed connection manner or a detachable connection manner, and the specific structure is not limited in this embodiment. In this way, providing the bracket 340 is helpful to support the working box more stably. In order to facilitate manual push-pull of the working box mechanism, in a preferred embodiment, a push-pull handle 341 is provided on the bracket 340. In this way, the worker only needs to push and pull the handle 341 to push the whole working box mechanism to move.

According to the invention, multiple printing guide rails 220 and multiple material-dropping mechanisms 230 are arranged between the two material-dropping guide rails 210. The specific number of printing guide rails 220 and material-dropping mechanisms 230 is determined according to the actual printing requirements. In an embodiment, the material-dropping guide rails 210 and the printing guide rails 220 are both motion modules. For the structures of the motion modules, reference may be made to the structures of the motion modules of the printing head and the sand spreading machine of the sand mold 3D printer in the prior art, which will not be described in detail here. In an embodiment, the multiple printing guide rails and the multiple material-dropping mechanisms are arranged between two symmetrically arranged material-dropping guide rails at intervals. That is, the multiple printing guide rails and the multiple material-dropping mechanisms can be connected with each other or spaced apart from each other, and no matter what the setting mode is, because the printing guide rails and the material-dropping mechanisms can realize synchronous reciprocating movement along with the material-dropping guide rails, the mounting type is not specifically limited in this embodiment. In this way, by starting the symmetrically arranged material-dropping guide rails, the material-dropping mechanisms mounted on the material-dropping guide rails can be driven to move synchronously with the printing guide rails. After the printing stroke in one direction is completed, the material-dropping mechanisms and the printing guide rails can move in an opposite direction synchronously by controlling the material-dropping guide rails to move in the opposite direction. That is to say, by controlling the material-dropping guide rails to move forward and backward in a certain stroke range, the circular reciprocating movement of the material-dropping mechanisms and the printing guide rails can be realized. In this process, multiple material-dropping mechanisms and multiple printing guide rails can be mounted according to actual printing requirements, so that printing and material-dropping can be carried out synchronously, and the whole printing process can be continuously carried out, thereby effectively improving printing efficiency. It should be noted that, in a case that two or more printing guide rails are provided, it should be ensured that at least one printing guide rail 2is slidably provided with one printing mechanism, so that the printing mechanism can move along the printing guide rails to realize printing in a direction perpendicular to the sand-falling direction. That is to say, some printing guide rails may not be provided with the printing mechanism, which can be explained with reference to the following embodiments.

### First Embodiment

At least one crossbeam is arranged between the two material-dropping guide rails, and each of the crossbeams is correspondingly mounted with one printing guide rail. That is, the crossbeam is a structure supporting the printing guide rail. In this way, by setting the crossbeam, the printing guide rail can be mounted more stably, and the influence of mutual movement between the printing guide rail and the material-dropping guide rail can be effectively avoided. It should be noted that, the printing guide rail can be directly set between the two material-dropping guide rails, that is, there is no need to provide the crossbeam for support. However, the provision of the crossbeam can ensure that the printing guide rail and the material-dropping guide rail are not influenced by each other in the movement.

### Second Embodiment

A crossbeam is slidably arranged between the two material-dropping guide rails, and the material-dropping mechanism is provided on a side of the crossbeam away from the printing guide rail. In this embodiment, the printing mechanism is integrated with the material-dropping mechanism through the crossbeam, and the printing mechanism reciprocates along the material-dropping guide rail along with the material-dropping mechanism. That is, in normal operation, the material-dropping mechanism moves along the AB direction to drop materials. In this process, the printing mechanism moves along with the material-dropping mechanism, and the printing mechanism does not print, and the printing mechanism prints while the printing mechanism moves along the CD direction along with the material-dropping mechanism. That is, the material-dropping mechanism performs material-dropping operation during the forward process, and then performs printing operation during the backward process.

### Third Embodiment

Two crossbeams are slidably arranged between the two material-dropping guide rails, the material-dropping mechanism is arranged between the two crossbeams, and one printing mechanism is provided at one side of each crossbeam away from the material-dropping mechanism. In this embodiment, the printing mechanisms are respectively arranged on two sides of the material-dropping mechanism and integrated on the same material-dropping guide rail, and the two printing mechanisms reciprocate along the material-dropping guide rail together with the material-dropping mechanism. That is, in normal operation, when the material-dropping mechanism moves along the EF direction to drop materials, the left printing mechanism moves together with the material-dropping mechanism to print, and when the material-dropping mechanism moves in the GH direction to drop materials, the right printing mechanism moves together with the material-dropping mechanism to print. That is, printing is performed while the material-dropping is performed during the forward process of the material-dropping mechanism, and printing is still performed during the backward process. In this way, continuous printing can be realized without waiting for material-dropping to finish, and the printing efficiency is relatively high.

### Fourth Embodiment

One crossbeam is slidably arranged between the two material-dropping guide rails, and one material-dropping mechanism is mounted on each of two sides of the crossbeam. In this embodiment, by respectively providing one material-dropping mechanism on each side of the crossbeam on which the printing mechanism is mounted and integrating the material-dropping mechanisms and the printing mechanism on the same material-dropping guide rail, the printing mechanism reciprocates along the material-dropping guide rail together with the material-dropping mechanisms. That is, in normal operation, when the right material-dropping mechanism moves along the JK direction to drop materials, the printing mechanism moves together with the right material-dropping mechanisms to print, and when the left material-dropping mechanism moves along the MN direction to drop materials, the printing mechanism moves together with the left material-dropping mechanism to print. That is, by providing one set of printing mechanism and two sets of material-dropping mechanisms, continuous printing can be realized in the round trip, and the material-dropping is executed by two material-dropping mechanisms, which can facilitate continuous printing without interruption due to feeding.

### Fifth Embodiment

Two crossbeams are slidably arranged between the two material-dropping guide rails, the material-dropping mechanism is arranged between the two crossbeams, and an arched gantry mechanism is bridged between the two crossbeams along the vertical direction, where the printing mechanism is mounted on one of the crossbeams and is able to slide to the other crossbeam through the arched gantry mechanism. In an embodiment, the arched gantry mechanism includes an arched sliding rail and connecting blocks movably arranged at two ends of the arched sliding rail, and the connecting blocks are movably connected with the printing mechanism. The printing mechanism includes a sliding block and a printing head arranged on the sliding block, and the sliding block is movably mounted on the printing guide rail. In a preferred embodiment, the sliding block is rotatably connected with the connecting blocks. Specifically, the sliding block is mounted on the printing guide rail and drives, together with the printing guide rail, the printing head to reciprocate along the printing guide rail. When the printing head is required to be transferred to another printing guide rail through the arched gantry mechanism, it is preferred to detach the sliding block from the printing guide rail and adjust the mounting angle between the sliding block and the connecting block, so that the printing head slides along the arched sliding rail to the printing guide rail on the other side. Similarly, the sliding block is mounted on the printing guide rail on the other side, and then the printing head moves along the printing guide rail on the other side. In this embodiment, by providing the arched gantry mechanism above the material-dropping mechanism, the printing mechanism reciprocates along the material-dropping guide rail along with the material-dropping mechanism. That is, during normal operation, after the material-dropping mechanism and the printing mechanism print one layer in the OP direction synchronously, the printing mechanism is transferred to the other side of the material-dropping mechanism through the arched gantry mechanism, and when the material-dropping mechanism and the printing mechanism return in the QR direction, material-dropping and printing are still carried out synchronously, which greatly improves the efficiency of the device. That is, one set of printing mechanism can be mounted to the two printing guide rails through the arched gantry mechanism, thereby realizing printing during the round trip.

### Sixth Embodiment

Two crossbeams are slidably arranged between the two material-dropping guide rails, the material-dropping mechanism is arranged between the two crossbeams, and the arched gantry mechanism is bridged between two ends of the two crossbeams on one side in the horizontal direction, where the printing mechanism is mounted on one of the crossbeams and is able to slide to the other crossbeam through the arched gantry mechanism. In this embodiment, by providing the arched gantry mechanism at one side of the material-dropping mechanism, the printing mechanism reciprocates along the material-dropping guide rail along with the material-dropping mechanism. In a preferred embodiment, the printing mechanism includes a printing head, a first connecting part and a second connecting part, where one end of the first connecting part is connected with the printing head, the first connecting part is movably arranged on the printing guide rail, the second connecting part is integrated with the first connecting part, and the arched gantry mechanism is connected with the second connecting part. In this way, by bridging the arched gantry mechanism between the two crossbeams, one end of the arched gantry mechanism is connected with the printing mechanism and another end of the arched gantry mechanism is connected with the crossbeam. When the printing head is driven to slide out from the printing guide rail on one side crossbeam, the print head will slide to the other crossbeam on the other side along the arched gantry mechanism arranged in the horizontal direction. Further, the first connecting part is then slidably connected with the printing guide rail on the other crossbeam on the other side, and the printing mechanism can print on the other side. That is, during normal operation, after the material-dropping mechanism and the printing mechanism print one layer in the ST direction synchronously, the printing mechanism is transferred to the other side of the material-dropping mechanism through the arched gantry mechanism, and when the material-dropping mechanism and the printing mechanism return in the UV direction, material-dropping and printing are still carried out synchronously, which greatly improves the efficiency of the device.

In order to reduce the amplitude influence of the material-dropping mechanism on the printing mechanism during movement, in an embodiment, sliding blocks are provided at two ends of each crossbeam and two ends of each material-dropping mechanism, and each sliding block is slidably connected with the material-dropping guide rail. That is, double sliding blocks are provided at the material-dropping guide rail, which are respectively connected with the material-dropping mechanism and the crossbeam, so as to reduce the amplitude influence of the material-dropping mechanism on the printing mechanism during movement, thereby improving the printing accuracy.

In order to improve the curing speed of printed products, in an embodiment, a heating element is provided at one side of each material-dropping mechanism. The heating element may be an electric heating coil or an electric heating block. In this way, by starting the heating element, the product formed at a lower end of the material-dropping mechanism can be cured quickly, thereby improving the printing efficiency.

It can be seen that different combination ways of the printing guide rails, the material-dropping mechanisms and the printing mechanisms may be designed for the printing assembly according to the actual needs in the specific working process, thus greatly improving the printing efficiency of the device.

According to the 3D printing device, the material-dropping guide rails, the multiple printing guide rails, the multiple printing mechanisms and the multiple material-dropping mechanisms of the printing assembly are integrally arranged on the support frame, and the multiple printing mechanisms and the multiple material-dropping mechanisms can synchronously reciprocate along the material-dropping guide rails, thereby effectively improving the printing efficiency of the 3D printing device. By integrating the working box and the lifting component into a whole and movably arranging the working box and the lifting component inside the support frame, the positioning times of the working box and the lifting component can be reduced, the positioning requirements are lowered, and the horizontal stability of the bottom plate of the working box can be ensured without being influenced by the positioning of the lifting component and the bottom plate of the working box, which can achieve rapid and continuous printing while ensuring more efficient printing accuracy.

In order to efficiently carry the working box to the printing station, with reference to Figures 7 to 10, the working box mechanism 300 further includes a moving component 350 connected with the lifting component 320 configured to carry the working box 310 and the lifting component 320. In an embodiment, the moving component 350 includes a sliding rail 351 which is extended and laid inside the support frame 100, and the lifting component 320 is movably arranged on the sliding rail 351. In an embodiment, sliding blocks are symmetrically arranged on two sides of the bottom surface of the mounting platform 330, and the sliding blocks are cooperatively arranged on the sliding rails. In this way, by driving the sliding block to move along the sliding rail, the lifting component and the working box can be moved or removed integrally toward the printing station. In an embodiment, a pulley 352 is provided at the bottom of the lifting component 320, and the pulley 352 is arranged in cooperation with the sliding rail 351. In this way, through the cooperation the sliding rail and the pulley, the working box mechanism can be stably carried more quickly. In an embodiment, the moving component 350 includes a roller 353, which is arranged at the bottom of the lifting component 320. In this way, by driving the roller 353, the lifting component and the working box can be moved or removed integrally toward the printing station. Preferably, the roller 353 has a stopper, which can facilitate the reliable and stable parking of the working box mechanism during transportation. It should be noted that, the roller 353 is different from the pulley 352 in structure. The pulley cooperates with the sliding rail to realize rotary, while the roller 353 can directly realize transportation of the working box mechanism by its own rotation. Preferably, the working box mechanism 300 further includes a position-limiting member, and the position-limiting member is arranged at a printing position in the support frame 100. The movable working box mechanism can be fixed in the working position through the provision of the position-limiting member, and then printing can be carried out, thereby realizing rapid positioning and improving the working efficiency.

In an embodiment, the moving component further includes an opening AGV (the figure is omitted), an inner cavity of the AGV contains the lifting component, and an upper edge of the AGV is in contact with the working box. AGV (Automated Guided Vehicle) is a transport vehicle equipped with electromagnetic or optical automatic guiding devices, which can travel along the specified guiding path and has safety protection and various transfer functions. An upper surface of the AGV is recessed in the middle, and the recess in the middle is configured to accommodate the lifting component. The upper surface of the AGV is in contact with the working box, and the periphery of the AGV is closed. In this way, since the AGV has high positioning accuracy and can realize trackless movement, it is also suitable for serving as a moving part. Therefore, a recess is provided to accommodate the lifting component, so that the integrated lifting mechanism and the working box are fixed on the AGV Because the sand cleaning work needs to be realized, in view of the large amount of dust during sand cleaning, it is best for the AGV to contact the working box, so as to support the working box on the one hand, and to close the periphery on the other hand. When the sanding cleaning is in progress, the sand and dust will not enter the AGV and the lifting mechanism, thereby prolonging the service life of the equipment.

In order to support the working box more effectively, in one embodiment, referring to Figure 6 again, a roller bed 130 is arranged inside the support frame 100, and the roller bed 130 is configured to carry the working box 310. It should be noted that, the area of the bottom surface of the working box is larger than the cross-sectional area of the lifting component, so that when the working box is connected with the lifting component, a certain width of mounting surface will be reserved at the bottom edge of the working box. When the working box and the lifting component are pushed into the support frame as a whole, the two sides of the bottom surface of the working box will be naturally carried on the track, thereby accelerating the propulsion speed. It should be understood that, due to the arrangement of the roller bed, part of the weight of the working box can be resolved, thereby reducing the pressure of the working box on the lifting component, thereby realizing more effective support of the working box. It should be noted here that, the roller bed, the sliding rail and the roller or the roller bed and the trolley can be together or separately provided, and the united provision is a preferred solution.

In order to facilitate the timely cleaning of the printing mechanism, in an embodiment, referring to Figure 6 again, the 3D printing device further includes a cleaning liquid tank 400, which is mounted on the support frame 100 and is close to the printing mechanism 240. The cleaning liquid is stored in the cleaning liquid tank 400. Specifically, a cleaning member is provided in the cleaning liquid tank 400, and the cleaning member is configured to suck the cleaning liquid of the cleaning liquid tank 400 and flush the printing mechanism. For the specific structure, reference may be made to the cleaning assembly of the printing mechanism in the prior art, which will not be described in detail in this embodiment.

In order to facilitate the mixing of printing materials, in an embodiment, referring to Figure 6 again, the 3D printing device further includes a mixing mechanism 500, which is arranged outside the support frame 100. Specifically, the mixing mechanism 500 is connected with the material-dropping mechanism 230. That is, by providing the mixing mechanism 500, the materials used by the material-dropping mechanism are mixed in time and transported to the material-dropping mechanism, so as to carry out the material spreading operation.

In order to realize the secondary feeding and avoid feeding interruption, in one embodiment, referring to Figure 6 again, a buffer silo is further provided on the support frame 100, and the buffer silo 600 is connected with the mixing mechanism 500 and is used for feeding the material-dropping mechanism 230. Specifically, the buffer silo 600 is connected with the mixing mechanism 500 through a connecting pipe, so that the device has a compact structure, simple and convenient operation, and strong mobility, and can be flexibly used according to the site conditions by providing the buffer silo 600.

In one embodiment of the 3D printing device, the mixing mechanism 500 includes a frame, a raw material bin, a material conveying device, a quota device, a mixing device and a buffer device which are arranged on the frame. The raw material bin is in communication with the quota device through a material conveying device, the quota device is in communication with the mixing device, and the buffer device is in communication with the mixing device.

Specifically, the sand supply device is simplified and integrated to the frame, and all devices are integrated together to complete sand mixing in a small space, and sand can be transported to the 3D printing device. The whole device is integrated on the frame to realize the layout in a small space. This set of sand supply device is generally provided above the 3D printing device to facilitate the flow of materials from top to bottom. In this case, this set of sand supply device is provided on a side of the 3D printing device to reduce the height of the overall device and realize the layout in a small space. The granular material in the raw material bin, generally sand, is transported to the quota device through the material conveying device. The quota device weighs a pre-set amount of particulate matter, and there is also a collaborative liquid weighing device. The liquid and the weighed particulate matter which are matched with each other are transferred to the mixing device, the particulate matter and the liquid are uniformly mixed in the mixing device, and then the mixed raw materials are transferred to the buffer device to provide raw materials for the additive manufacturing equipment.

Preferably, the quota device is arranged at an upper part of the frame, and after passing through the frame, the quota device is connected with the mixing device in the frame. The buffer device communicated with the mixing device is provided at the lower part of the mixing device. The raw material bin is provided at the lower part of the buffer device, and the raw material bin is arranged at the lower part of the frame.

The raw material bin, conveying device, quota device, mixing device and buffer device are all provided on the frame so as to facilitate the overall movement, experiments or transfer, while maximizing the use of space. In general, the raw material bin contains more materials, so it is provided at the bottom to facilitate feeding. Then, the material is transferred to the quota device through the conveying device, and the quota device is provided at the top to ensure the weighing accuracy and facilitate the smooth flow and transfer of subsequent materials from top to bottom. The middle space just accommodates the mixing device to realize uniform mixing of materials, and the horizontal height of the buffer device matches the height of the sand spreading machine of the 3D printing device, thus realizing material transfer. The overall layout is compact and the design is scientific, which maximizes the use of space and saves the occupied space.

Preferably, the material conveying device is at least one of a negative pressure suction device, a vacuum suction device or a stirring wheel conveying device.

Materials are transported from bottom to top by the material conveying device. In order to improve efficiency and have less shape limitation, negative pressure suction or vacuum suction is generally adopted for transfer. In order to simplify the structure and weight, the form of stirring wheel transportation will be selected. In short, the appropriate way is selected to transfer materials from the raw material bin to the quota device.

Preferably, the 3D printing device further includes a mobile device, the mobile device is arranged at the bottom of at least one of the frame or the raw material bin, and drives at least one of the frame or the raw material bin to move.

In order to move more conveniently, mobile devices can be arranged at the lower parts of the frame and the raw material bin, that is, convenient moving devices such as rails or pulleys can be arranged to make the frame move conveniently or facilitate the raw material bin to enter and exit the frame.

Preferably, the mixing device includes a barrel body and a mixing device, the mixing device is arranged in the barrel body, and the bottom surface of the barrel body is an inclined plane inclined toward a material outlet, and the material outlet is in communication with the buffer device.

The bottom surface of the mixing device is arranged to incline toward the material outlet, so as to facilitate the flow of materials to the buffer device, to completely empty the mixed materials, and to more quickly transfer the materials.

Preferably, the raw material bin is divided into at least two independent spaces with openings upward.

Old sand and new sand are stored in the raw material bin. When the additive manufacturing and printing work is carried out, the new sand and the old sand are mixed for use, which can save the cost. The new sand and the old sand can be stored in the raw material bin after being mixed, or the raw material bin can be divided into two spaces, where the new sand and the old sand are directly stored separately, and then transported to the quota device according to a proportion, thus completing the mixing work.

Preferably, the space of the raw material bin is a conical space with a small bottom and a large top, and one end of the material conveying device is arranged at the bottom of the conical space of the raw material bin.

In order to cooperate with the conveying device and transfer the particulate matter in the raw material bin as completely as possible, the space of the raw material bin is designed as a cone, so that with the decrease of materials, the materials can automatically slide down and then enter the conveying device, thus realizing the complete material transfer as complete as possible.

Preferably, the frame includes a frame body and a position-limiting block, where the cooperation position of the frame body and the raw material bin is open at one side, and the opening is used for the raw material bin to enter and exit the frame body. A position-limiting block is arranged on the frame body on the opposite side of the opening, and is in elastic contact with the raw material bin and made of flexible elastic material.

The raw material bin is designed as a push-pull drawer, which goes in and out of the frame. Because the weight of the raw material bin is heavy, in order to protect the frame, the position-limiting block is designed to be made of elastic material, which plays a buffering role when the raw material bin enters and exits the frame.

Preferably, the frame further includes guide wheels which are arranged on two sides of the opening of the frame body. The guide wheels are in contact with the raw material bin, and the rotating direction of the guide wheel matches the direction of the raw material bin entering and leaving the frame body.

In order to facilitate the entry and exit of the raw material bin into and out of the frame, the guide wheels on both sides are designed to play a guiding role, which more quickly and safely locates the heavy raw material bin.

Preferably, the sand supply device further includes a liquid quota device. The liquid quota device is arranged on one side of the mixing device, and the liquid quota device is in communication with the mixing device.

The liquid quota device is configured to provide liquid for the mixing device to be mixed with the particulate matter in the raw material bin.

In order to facilitate high concentration among components of 3D printing device, in one embodiment of the 3D printing device, an electric control cabinet 700 is further provided on the support frame 100. By arranging the electric control cabinet 700 on the support frame, the operators can operate nearby, and the whole device is highly concentrated, and the working efficiency is further effectively improved.

In an embodiment of the 3D printing device, the cleaning piece includes an inkjet mechanism and a scraping mechanism which are adjacently arranged. The inkjet mechanism includes an ink reservoir for collecting inkjet from the printing head. An ink outlet and a negative pressure port are provided on the ink reservoir. The ink outlet is configured to discharge the inkjet in the ink reservoir. A negative pressure suction member is installed at the negative pressure port, and a sealing strip is arranged at the periphery of the pool port of the ink reservoir to tightly attach the printing head to the pool port of the ink reservoir. The ink outlet and the negative pressure port are both arranged at the bottom of the ink reservoir, and the ink outlet is installed with an ink discharge pipe. The scraping mechanism includes a cleaning tank, a rotating shaft penetrating through the cleaning tank, a wiper plate mounted on the rotating shaft and configured to scrap the printing head leaving the ink reservoir, and a driving member which is drivingly connected with the rotating shaft and configured to control the wiper plate to rotate along the cleaning tank for cleaning.

In one of the specific embodiments, the inkjet mechanism further includes a lifting component mounted on the ink reservoir for driving to raise or lower the ink reservoir, and a fixed base, where the lifting component is drivingly connected with the fixed base. Specifically, a filter screen is mounted in the ink reservoir to filter the large particle impurities in the ink reservoir. In one of the specific embodiments, the scraping mechanism further includes a clamper mounted on the rotating shaft, and the wiper plate is clamped and mounted on the clamper. In one of the specific embodiments, the negative pressure suction member specifically includes a negative pressure pipe and a suction pump, where the negative pressure pipe is tightly arranged at the negative pressure port, and the suction pump is connected with the negative pressure pipe. Specifically, there are two negative pressure ports, and each negative pressure port is provided with one negative pressure pipe.

In an embodiment of the 3D printing device, the printing device further includes a scrubbing mechanism of the sand spreading machine. The scrubbing mechanism of the sand spreading machine includes a first bracket, a second bracket, sliding rails, a sliding seat, a lifting bracket and a scrubbing component. The sliding rails are respectively fixed on the same sides of the first bracket and the second bracket, the sliding seat is slidably connected to the bottom of the sliding rails, and the sliding seat is connected with the lifting bracket, and the scrubbing component is connected with the lifting bracket for scrubbing the sand scraping bottom plate of the sand spreading machine. In an embodiment, the lifting bracket specifically includes a telescopic cylinder, where the end part of a telescopic rod of the telescopic cylinder is fixed with the bottom side of the sliding seat; the telescopic cylinder is vertically arranged and a lifting bracket is fixed at the bottom of the cylinder seat, and the telescopic cylinder can be a telescopic air cylinder. The lifting bracket extends above the sliding rail and is connected with a horizontal mounting plate. The upper surface of the mounting plate is fixed with a scrubbing module, and brushes are provided at two sides of the scrubbing module respectively. The mounting direction of the sliding rail length is the same as that of the sand scraping bottom plate of 3D printing sander. The scrubbing module and the brush head can move back and forth to scrub the bottom surface of sand spreading and scraping bottom plate. Further, the printing device is further equipped with a moisturizing mechanism and a sand cleaning mechanism, where the moisturizing mechanism is arranged in contact with the nozzle of the printing head to ensure that the nozzle is wet. The sand cleaning mechanism is arranged close to the working box, and is used for cleaning printing sand.

The present application further provides a 3D printing device, and different embodiments of the 3D printing device will be described with reference to Figures 11-22.

In an embodiment, referring to Figure 11, Figure 11 is an isometric structure diagram of a 3D printing device according to a specific embodiment of the present application. The 3D printing device provided by the present application includes a support frame 4, a printing assembly and a working box mechanism 7.

Where, the printing assembly and the working box 7 mechanism are integrated in the support frame 4. The printing assembly includes a material-dropping guide rail 5, multiple printing guide rails 6, multiple material-dropping mechanisms 8 and multiple printing mechanisms 10. Each printing guide rail 6 and each material-dropping mechanism 8 are arranged on the material-dropping guide rail 5, and one printing mechanism 10 is slidably arranged on at least one printing guide rail 6. The working box mechanism 7 includes an integrated working box 7 and a lifting component, where the lifting component is used for lifting the bottom plate of the working box 7 to lift along the vertical direction, and the working box 7 and the lifting component are movably arranged inside the support frame.

During printing, the material-dropping mechanism 8 lays materials along the material-dropping guide rail 5, and the printing mechanism 10 prints along the printing guide rail 6 after a layer of sand laying is completed. After printing once, the printing guide rail 6 moves along the material-dropping guide rail 5 for a certain distance, and then the printing mechanism 10 continues to print along the printing guide rail 6, and this cycle is repeated until one layer is printed. After a printing cycle is completed, the lifting mechanism 19 drives the bottom plate of the working box 7 to descend to a height, and the material spreading and printing cycles are repeated. This is repeated until the end of the printing task.

By applying the 3D printing device provided by the present application, the material-dropping guide rail 5, the printing guide rail 6, the printing mechanism 10 and the material-dropping mechanism 8 of the printing assembly are integrally arranged on the support frame 4, and the printing mechanism 10 and the material-dropping mechanism 8 can synchronously reciprocate along the material-dropping guide rail 5, thereby effectively improving the printing efficiency of the 3D printing device; and by integrating the working box 7 and the lifting component into a whole and movably passing through the inside of the support frame 4, the positioning times of the working box 7 and the lifting component can be reduced, the positioning requirements are lowered, and the horizontal stability of the bottom plate of the working box 7 can be ensured without being influenced by the positioning of the lifting component and the bottom plate of the working box 7, which can achieve rapid and continuous printing while ensuring more efficient printing accuracy. And through the above settings, the structure is compact, the space occupation is small, and the cost is low, which is conducive to enter the ordinary public life for use.

According to requirements, the 3D printing device generally includes a feeding device 9, an electrical cabinet, an outer protection, a mixing platform, a material cleaning platform, and the like. Where, a material-dropping guide rail 5 is provided at the upper part of the equipment frame, and a feeding device 9 is provided at the upper part of the equipment frame; a material-dropping mechanism 8 and a printing guide rail 6 are mounted on the material-dropping guide rail 5, and a printing mechanism 10 is mounted on the printing guide rail 6; the material-dropping mechanism 8 and the printing mechanism 10 are driven by the driving mechanism to reciprocate along the corresponding material-dropping guide rail 5 and printing guide rail 6; the electrical cabinet 11 is internally integrated with an air source generation and electrical control system; the upper cover of the outer protection can be opened to facilitate cleaning; the mixing platform is used for mixing raw materials and adding the mixed raw materials into the feeding device 9 of the 3D printing device; the sand cleaning platform is used to filter the excess raw materials on the printing products. The structure of each part is separately introduced below through different embodiments. Each of the embodiments is mainly focused on describing its differences from other embodiments, and references may be made among these embodiments with respect to the same or similar parts.

As for the material-dropping guide rail 5, in one embodiment, the material-dropping guide rails 5 are arranged in pairs, and two material-dropping guide rails 5 are arranged on symmetrical sides of the support frame 4; each printing guide rail 6 and each material-dropping mechanism 8 are respectively arranged between the two material-dropping guide rails 5.

Specifically, the material-dropping guide rail 5 and the printing guide rail 6 are both motion modules, and the specific structures can be referred to the transplanting motion modules of the printing head and sander used in the 3D printer in the prior art, which will not be described in detail in this embodiment. Where, the specific number of printing guide rails 6 and material-dropping mechanisms 8 is set and mounted according to the actual printing requirements. In one embodiment, two symmetrically arranged material-dropping guide rails 5 are arranged on the support frame 4 of the printing device at intervals. In one embodiment, each printing guide rail 6 is connected with each material-dropping mechanism 8, and is arranged between two symmetrically arranged material-dropping guide rails 5. In an embodiment, each printing guide rail 6 and each material-dropping mechanism 8 are arranged between two symmetrically arranged material-dropping guide rails 5 at intervals. That is, each printing guide rail 6 and each material-dropping mechanism 8 can be connected with each other or spaced apart from each other, and no matter what the setting mode is, because it can realize synchronous reciprocating movement along with the material-dropping guide rail 5, its mounting type is not specifically limited in this embodiment. In this way, by starting the symmetrically arranged material-dropping guide rails 5, the material-dropping mechanism 8 mounted on the material-dropping guide rail 5 can be driven to move synchronously with the printing guide rail 6. After the stroke printing work in one direction is completed, the material-dropping mechanism 8 and the printing guide rail 6 can move in the opposite direction synchronously by controlling the material-dropping guide rail 5 to move in the opposite direction. That is to say, by controlling the material-dropping guide rail 5 to move forward and backward in a certain stroke range, the circular reciprocating movement of the material-dropping mechanism 8 and the printing guide rail 6 can be realized. In this process, multiple material-dropping mechanisms 8 and printing guide rails 6 can be mounted according to actual printing requirements, so that printing and material-dropping can be carried out synchronously, and the whole printing process can be continuously carried out, thereby effectively improving printing efficiency. It should be noted that, when the mounting number of printing guide rails 6 is greater than or equal to 2, it is ensured that a printing mechanism 10 is slidably provided at at least one printing guide rail 6, so that the printing mechanism can move along the printing guide rails 6 to realize printing in a direction perpendicular to the sanding direction. That is to say, some printing guide rails 6 may not be provided with the printing mechanism 10, which can be explained with reference to the following embodiments.

According to the invention, at least one crossbeam is arranged between the two material-dropping guide rails 5, and each of the crossbeams is correspondingly mounted with a printing guide rail 6. That is, the crossbeam is a structure supporting the printing guide rail 6. In this way, by setting the crossbeam, the printing guide rail 6 can be mounted more stably, and the influence of mutual movement between the printing guide rail 6 and the material-dropping guide rail 5 can be effectively avoided. It should be noted that, the printing guide rail 6 can be directly set between the two material-dropping guide rails 5, that is, there is, according to an arrangement not covered by the claims, no need to set the crossbeam support, but the setting of the crossbeam can ensure that the printing guide rail 6 and the material-dropping guide rail 5 are influenced by each other in the movement.

In an embodiment of one 3D printing device, a crossbeam is slidably arranged between the two material-dropping guide rails 6, and a material-dropping mechanism 8 is provided on the side of the crossbeam away from the printing guide rail 6. In this embodiment, the printing mechanism 10 is integrated with the material-dropping mechanism 8 through the crossbeam, and the printing mechanism 10 reciprocates along the material-dropping guide rail 5 along with the material-dropping mechanism 8. That is, in normal operation, the material-dropping mechanism 8 moves along the material-dropping guide rail 5 for material-dropping. In this process, the printing mechanism 10 moves along with the material-dropping mechanism 8, but the printing mechanism 10 does not print, and realizes printing when the printing mechanism 10 moves back with the material-dropping mechanism 8. That is, the material-dropping mechanism 8 performs material-dropping operation during the process, and then performs printing operation during the return trip.

In an embodiment of another 3D printing device, two crossbeams are slidably arranged between the two material-dropping guide rails 5, the material-dropping mechanism 8 is arranged between the two crossbeams, and one side of each crossbeam away from the material-dropping mechanism 8 is provided with the printing mechanism 10. In this embodiment, printing mechanisms 10 are respectively arranged on both sides of the material-dropping mechanism 8 and integrated on the same material-dropping guide rail 5, and the two printing mechanisms 10 reciprocate along the material-dropping guide rail 5 together with the material-dropping mechanism 8. That is, in normal operation, when the material-dropping mechanism 8 moves to the right along the material-dropping guide rail 5 for material-dropping, the left printing mechanism 10 moves together with the material-dropping mechanism 8 for printing; when the material-dropping mechanism 8 returns to the left along the material-dropping guide rail 5 for material-dropping, the right printing mechanism 10 moves together with the material-dropping mechanism 8 for printing. That is, the material-dropping mechanism 8 performs printing while material-dropping in the process, and then performs printing at the same time when returning. In this way, continuous printing operation can be realized without waiting for material-dropping to finish, and the printing efficiency is relatively high.

In an embodiment of another 3D printing device, a crossbeam is slidably arranged between the two material-dropping guide rails 5, and a material-dropping mechanism 8 is respectively mounted on both sides of the crossbeam. In this embodiment, by respectively setting a material-dropping mechanism 8 on both sides of the crossbeam on which the printing mechanism 10 is mounted and integrated on the same material-dropping guide rail 5, the printing mechanism 10 reciprocates along the material-dropping guide rail 5 together with the material-dropping mechanism 8. That is, in normal operation, when the right material-dropping mechanism 8 moves to the right along the material-dropping guide rail 5 for material-dropping, the printing mechanism 10 moves together with the right material-dropping mechanism 8 for printing; when the material-dropping mechanism 8 returns to the left along the material-dropping guide rail 5 for material-dropping, the printing mechanism 10 moves together with the left material-dropping mechanism 8 for printing. That is, by setting up a set of printing mechanism 10 and two sets of material-dropping mechanism 8, continuous printing can be realized in the round-trip direction, and the material-dropping is executed by two material-dropping mechanisms 8 respectively, which can facilitate continuous printing without interruption of printing operation due to feeding.

In an embodiment of one 3D printing device, two crossbeams are slidably arranged between the two material-dropping guide rails 5, the material-dropping mechanism 8 is arranged between the two crossbeams, and an arched gantry mechanism is bridged between the two crossbeams along the vertical direction, where the printing mechanism 10 is mounted on one of the crossbeams and slides to the other crossbeam through the arched gantry mechanism. In an embodiment, the arched gantry mechanism includes an arched sliding rail and connecting blocks movably arranged at two ends of the arched sliding rail, and the connecting blocks are movably connected with the printing mechanism 10. Specifically, the printing mechanism 10 includes a sliding block and a printing head disposed on the sliding block, and the sliding block is movably mounted on the printing guide rail 6. In a preferred embodiment, the sliding block is rotatably connected with the connecting block. Specifically, the sliding block is mounted on the printing guide rail 6 and drives the printing head to reciprocate along the printing guide rail 6 with the printing guide rail 6. When it is necessary to transfer the printing head to another printing guide rail 6 through the arched gantry mechanism, it is preferred to detach the sliding block from the printing guide rail 6 and rotate the mounting angle between the sliding block and the connecting block, so that the printing head slides along the arched sliding rail to the printing guide rail 6 on the other side. Similarly, the sliding block is mounted on the printing guide rail 6 on the side, and then the printing head moves along the printing guide rail 6 on the side. In this embodiment, by arranging the arched gantry mechanism above the material-dropping mechanism 8, the printing mechanism 10 reciprocates along the material-dropping guide rail 5 along with the material-dropping mechanism 8. That is, during normal operation, after the material-dropping mechanism 8 and the printing mechanism 10 print one layer to the right along with the material-dropping guide rail 5 synchronously, the printing mechanism 10 jumps to the other side of the material-dropping mechanism 8 through the arched gantry mechanism. When the material-dropping mechanism 8 and the printing mechanism 10 return to the left along with the material-dropping guide rail 5, material-dropping and printing are still carried out synchronously, which greatly improves equipment efficiency. That is, a set of printing mechanism 10 is adopted to mount the two printing guide rails 6 through the arched gantry mechanism, thereby realizing the round trip and simultaneous printing.

In an embodiment of another 3D printing device, two crossbeams are slidably arranged between the two material-dropping guide rails, the material-dropping mechanism is arranged between the two crossbeams, and an arched gantry mechanism is bridged between one end of the two crossbeams in the horizontal direction, where the printing mechanism 10 is mounted on one of the crossbeams and slides to the other crossbeam through the arched gantry mechanism. In this embodiment, by arranging the arched gantry mechanism at one side of the material-dropping mechanism, the printing mechanism 10 reciprocates along the material-dropping guide rail along with the material-dropping mechanism. In a preferred embodiment, the printing mechanism 10 includes a printing head, a first connecting part and a second connecting part, where one end of the first connecting part is connected with the printing head, the first connecting part is movably arranged on the printing guide rail 6, the second connecting part is integrated with the first connecting part, and the arched gantry mechanism is connected with the second connecting part. In this way, by bridging the arched gantry mechanism between the two crossbeams, one end of the arched gantry mechanism is connected with the printing mechanism 10 and the other end is connected with the crossbeam. When the printing head is driven to slide out from the printing guide rail 6 on one side crossbeam, it will slide to the other side crossbeam along the arched gantry mechanism arranged in the horizontal direction. Further, when the first connecting part is slidably connected with the printing guide rail 6 on the other side crossbeam, the printing mechanism 10 can print on the other side crossbeam. That is, during normal operation, after the material-dropping mechanism and the printing mechanism 10 print one layer to the right along with the material-dropping guide rail 5 synchronously, the printing mechanism 10 jumps to the other side of the material-dropping mechanism through the arched gantry mechanism. When the material-dropping mechanism and the printing mechanism return to the left along with the material-dropping guide rail 5, material-dropping and printing are still carried out synchronously, which greatly improves equipment efficiency.

In order to reduce the impact of material-dropping mechanism on the amplitude of printing mechanism 10 during movement, in an embodiment, sliding blocks are provided at two ends of each crossbeam and two ends of each material-dropping mechanism, and each sliding block is in sliding connection with the material-dropping guide rail. That is, double sliding blocks are provided at the material-dropping guide rail, which are respectively connected with the material-dropping mechanism and the crossbeam, so as to reduce the impact of material-dropping mechanism on the amplitude of printing mechanism 10 during movement, thereby improving the printing accuracy.

In order to improve the curing speed of printed products, in an embodiment, a heating element is provided at the side of each material-dropping mechanism. Where, the heating element may be an electric heating coil or an electric heating block. In this way, by starting the heating element, the product formed at the lower end of the material-dropping mechanism can be cured quickly to improve the printing efficiency.

As for the material-dropping guide rail 5, the multiple setting modes of its paired arrangement are described above, and the material-dropping guide rail 5 can also be set separately according to requirements. Different from the above embodiments, in another embodiment, the mounting part is slidably connected to the material-dropping guide rail 5, and the printing guide rail 6 and the material-dropping mechanism 8 are fixedly connected to the mounting part respectively. That is, the printing mechanism 10 is integrated with the material-dropping mechanism 8, and a connecting part is mounted on the sliding block of the material-dropping guide rail 5. The connecting part may be a connecting plate 24, and the material-dropping mechanism 8 and the printing guide rail 6 are respectively mounted on the connecting plate 24. The printing mechanism 10 is mounted on the printing guide rail 6. In this embodiment, a single material-dropping guide rail 5 and a single printing guide rail 6 can be used, thus realizing the printing and spreading functions of the equipment at low cost.

In the above embodiments of the 3D printing device, the mixing platform is further provided independently with respect to the support frame 4. Referring to Figure 11, the mixing platform includes a supporting main body 15, a mixing machine 13 placed on the supporting main body 15, a weighing scale for measuring materials, and a holding cup 12 for holding and transferring materials. That is, the mixing platform is separated from the main equipment, which can reduce the equipment height on the one hand and realize flexible layout on the other hand. The weighing scale can be specifically an electronic scale 14, and other weighing equipment can be used as required. When mixing is required, a weighing scale is used to measure appropriate law materials and required liquid materials, and the holding cup 12 is used to add to the mixing machine 13 for mixing. After the mixing is completed, the holding cup 12 is used to add the mixed raw materials to the feeding device 9 of the 3D printing device. Then the above process is performed again until the feeding device 9 is filled with mixed raw materials. The supporting main body 15 can be a supporting platform with upper and lower multi-layer design. Different liquid materials are provided at the lower part of the supporting main body 15, and a mixing machine 13, a weighing scale and a material holding cup 12 are provided at the upper part. According to requirements, the supporting main body 15 may also adopt a support frame or a support cabinet.

In the above embodiments of the 3D printing device, the printing assembly further includes a gas source generating system, and the gas source generating system includes a gas source pump and a gas storage device. The gas source pump and the gas storage device are communicated through a pipeline, and a one-way valve is arranged in the pipeline, and the gas storage device is arranged behind the one-way valve. That is, the 3D printing device has its own gas source generating system. The gas source pump can be driven by a motor, which generates gas. To prevent gas from flowing backwards, a check valve is set between the gas source pump and the gas storage device, which only allows the gas source pump to pass in the direction of the gas storage device. The gas storage device may specifically be a gas storage tank. Through the above structural setting, it has its own gas source, thereby reducing the requirements for the use scene.

Further, a filter and a pressure regulator valve are arranged in the pipeline connected to the back of the gas source pump in sequence. That is, a filter is set behind the gas source pump, a pressure regulator valve is set behind the filter, and a check valve is set behind the pressure regulator valve. Compressed gas produced by the gas source pump is first filtered by the filter, then regulated by the pressure regulator valve and then enters the gas storage device through the check valve, and the generated gas is stored in the gas storage device.

Further still, a pressure detection device for detecting the air pressure in the gas storage device is provided on the gas storage device. The pressure detection device may specifically be a pressure sensor or a pressure gauge. Through the setting of the pressure detection device, the pressure in the gas storage device can be obtained in real time, thus the gas storage capacity can be controlled.

In order to achieve automatic control, the printing assembly further includes a controller, and the pressure detection device and the gas source pump are respectively electrically connected with the controller. The controller is used for controlling the gas source pump to start when the pressure value fed back by the pressure detection device is less than a first preset value, and controlling the gas source pump to stop when the pressure value fed back by the pressure detection device is equal to a second preset value, where the second preset value is not less than the first preset value. Taking the pressure detection device as a pressure sensor as an example, a pressure sensor is mounted on the gas storage device for detecting the air pressure in the gas storage device. When the air pressure is less than the first set value, the motor drives the air source pump to work, and when the air pressure in the gas storage device meets the requirements, such as reaching the second preset value, the air source pump stops working. Specifically, PID control can be adopted in the control, and the closed-loop feedback is formed through the air pressure in the gas storage device controlled by the pressure sensor, so as to stabilize the air pressure within the set range. According to requirements, the gas storage device is connected with the gas equipment through the secondary filter, that is, the gas in the gas storage device reaches the gas equipment through the secondary filter.

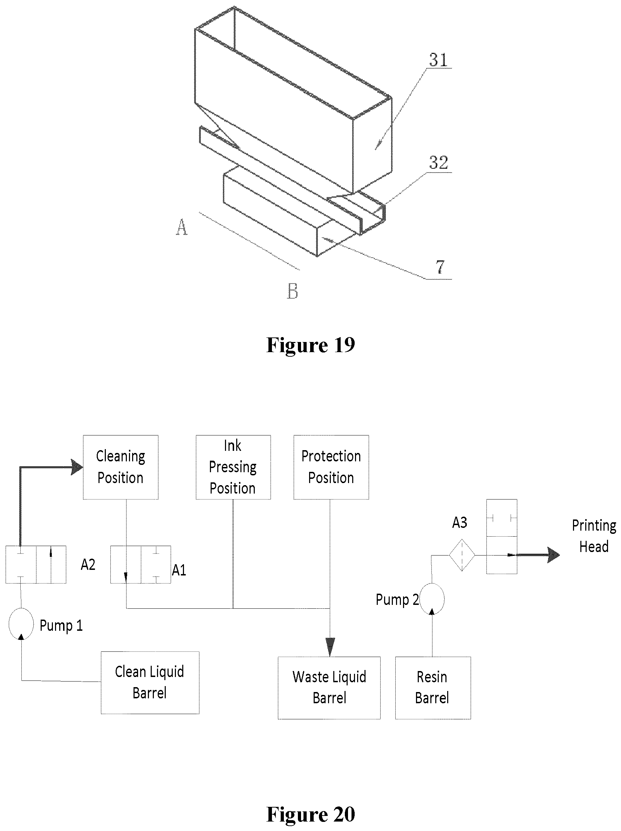

In the above embodiments of 3D printing device, please refer to Figure 19, further includes a feeding device 9, which includes a storage hopper 31, a feeding upper cover 22 and a valve 32, where the top end of the storage hopper 31 has an opening, the feeding upper cover 22 is arranged at the top end of the storage hopper 31 for opening or shielding the opening, and the valve 32 is hermetically connected to the bottom end of the storage hopper 31 to control discharging. That is, the feeding upper cover 22 is at the upper part of the storage hopper 31, and the valve 32 is at the lower part of the storage hopper 31. The feeding upper cover 22 and the storage hopper 31 together form a closed space to prevent the overflow of raw materials in the storage hopper 31 or the volatilization of liquid materials in the storage hopper 31. The storage hopper 31 is mainly used for storing raw materials required by 3D printing device, and preferably its volume is greater than or equal to that of the working box 7 in Figure 11. When the storage hopper 31 is full, the raw materials in it are sufficient to complete a printing task. In consideration of space occupation, the volume of the storage hopper 31 may also be smaller than the volume of the working box 7, and the material needs to be refilled during the completion of a printing task.

Further, the material-dropping port of the valve 32 is rectangular, and the length of the rectangle is equal to that of the material-dropping mechanism 8. As shown in Figure 19, the material-dropping port of the valve 32 is rectangular, and the length of the rectangle, that is, the length of the material-dropping port, is equal to the length AB of the material-dropping mechanism 8 in Figure 11. When the valve 32 is opened, all the lower raw materials in the storage hopper 31 fall into the material-dropping mechanism 8, and the length AB of the material-dropping mechanism 8 is completely filled with raw materials. There is no need to set up a separate mechanism in the material-dropping mechanism 8, and the raw materials are uniformly filled along AB. Further still, the length of the material-dropping mechanism 8 is greater than that of the working box 7, thus ensuring the material spreading effect. Specifically, in order to better drop the materials in the storage hopper 31, the lower part of the storage hopper 31 has a certain slope. For example, the lower part of the storage hopper 31 gradually inclines inward, which can guide the raw materials inside it.

In the above embodiments of 3D printing device, a liquid material system 1 is further provided, please refer to Figure 20. The liquid material system 1 includes a cleaning liquid barrel, a waste liquid barrel, a resin barrel, a first electromagnetic valve A1, a second electromagnetic valve A2, a third electromagnetic valve A3, a first liquid material pump (pump 1), a second liquid material pump (pump 2), a cleaning position 3, an ink pressing position and a protection position. The cleaning liquid barrel is connected with the cleaning tank of the cleaning position 3 through the first liquid material pump and the second electromagnetic valve in turn; the resin barrel is sequentially connected with the printing head of the printing mechanism 10 through the second liquid material pump and the third electromagnetic valve; the waste liquid tanks at the ink pressing position and the protection position is connected with the waste liquid barrel, and the waste liquid tank at the cleaning position 3 is connected with the waste liquid tank through the first electromagnetic valve. Three liquid material barrels are provided at the lower part of the liquid material system 1, namely a cleaning liquid barrel, a waste liquid barrel and a resin barrel, and the three barrels respectively contain cleaning agents, waste liquid and resin (adhesive sprayed by the 3D printer). The cleaning liquid barrel is connected with a first liquid material pump, and the first liquid material pump is connected with a second electromagnetic valve. When cleaning agent is added, the second electromagnetic valve is open and the first electromagnetic valve is closed, the first liquid material pump adds the cleaning agent in the cleaning liquid barrel into the cleaning tank on the cleaning position 3, a liquid level sensor is mounted on the cleaning tank, and the first liquid material pump stops working after the liquid level sensor detects the liquid level. The resin barrel is connected with a second liquid pump, the second liquid pump is connected with a filter, the filter is connected with a third electromagnetic valve, and the third electromagnetic valve is connected with the printing head through a pipeline. When resin is added, the second liquid material pump and the third electromagnetic valve are simultaneously opened, and the second liquid material pump add the liquid material in the resin barrel into the printing head for printing. The waste liquid tanks at the cleaning position 3, the ink pressing position and the protection position are connected into the waste liquid barrel through pipelines, where a first electromagnetic valve is connected between the cleaning position 3 and the waste liquid barrel. When collecting the waste liquid, the second electromagnetic valve is closed and the first electromagnetic valve is open, and the waste liquid flows to the waste liquid barrel by gravity, thereby achieving the purpose of collecting waste liquid.

In the above embodiments of 3D printing device, the working box 7 includes a working box 7 housing fixed on the support frame 4 and a movable bottom plate which can slide relative to the working box 7 housing. The bottom of the lifting mechanism 19 is fixedly connected with the support frame 4, and the top end is fixedly connected with the movable bottom plate of the working box 7 so as to drive the movable bottom plate to rise and fall along the vertical direction. Specifically, the working box 7 can be fixedly connected to the support frame 4 by bolts, and its movable bottom plate is fixedly connected to the upper door plate of the lifting mechanism 19, such as by screws or electromagnets. When the lifting door plate goes up or down, it drives the movable bottom plate of the working box 7 to move, so as to realize the movement of 3D printing device in the height direction.

In the above embodiments of 3D printing device, the printing assembly further includes an outer protective box 20 arranged outside the support frame 4. An upper cover 21 is arranged at the top of the outer protective box 20 corresponding to the printing area to expose or close the printing area. It should be noted that, the printing area refers to the position of the working box 7. By setting the upper cover 21, on the one hand, the printing process can be better observed by opening the upper cover 21. After printing, the upper cover 21 is opened, and the personnel standing on the front of the 3D equipment can clear the box and take out the 3D printed products from the upper part of the working box 7. Therefore, without setting guide rail or other moving mechanism, the working box 7 can be cleaned without moving out of the equipment.

Specifically, an opening corresponding to the feeding device 9 is provided at the top of the outer protective box 20, and the feeding upper cover 22 covers the opening. A liquid material barrel door 23 is arranged at the position corresponding to the liquid material barrel on the outer protective box 20.

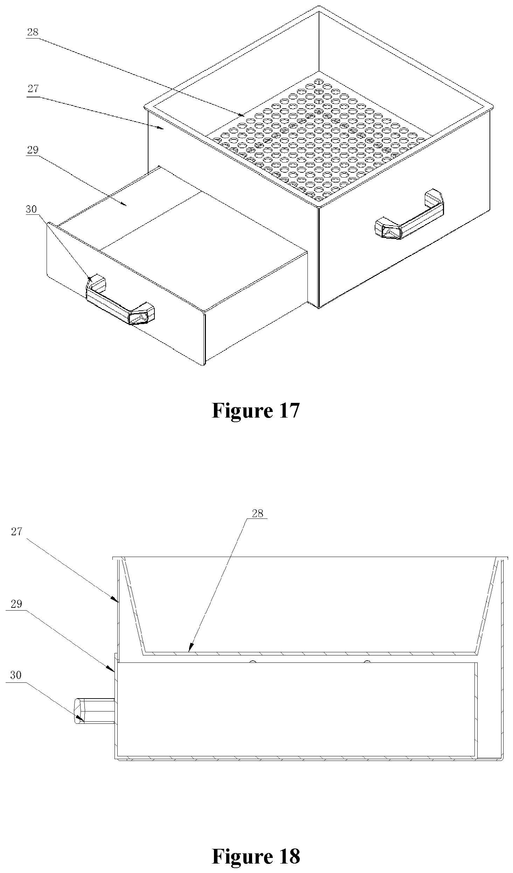

In the above embodiments of 3D printing device, the printing assembly further includes a cleaning platform. Referring to Figures 17 to 18, the cleaning platform includes a cleaning bracket 27, a screen 28 and a material receiving groove 29. The receiving groove 29 is movably mounted at the lower part of the cleaning bracket 27, and the screen 28 is arranged in the cleaning bracket 27 and positioned above the material receiving groove 29. Specifically, a screen 28 is placed on the upper part of the cleaning bracket, and a material receiving groove 29 is placed on the lower part. The upper part of the screen 28 overlaps with the cleaning bracket, and the side surface has a certain slope. A handle 30 is arranged on the material receiving groove 29, which is convenient to take out or put in the material receiving groove 29 from the cleaning bracket. The screen 28 is used to separate the 3D printed product from the surplus raw materials on its surface, and the material receiving groove 29 is used to collect the surplus raw materials cleaned from the 3D printed product.

In the above embodiments of 3D printing device, casters 2 are mounted at the bottom of the support frame 4, so they can move freely. When the equipment needs to be moved to other places, it can be realized without cranes or forklifts, which can greatly realize flexible layout and reduce the space requirements for the use places.

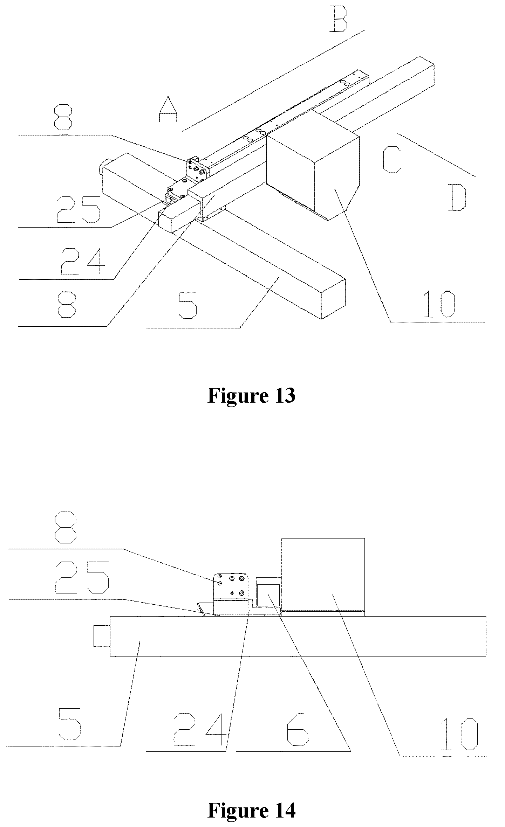

When printing with the above 3D printing device, the material-dropping mechanism 8 firstly adds sand below the feeding device 9, as shown in Figure 13, and then spreads materials along the CD direction; when the number of spreading layers reaches the set value, the material-dropping mechanism returns to the lower part of the feeding device 9 to add sand again. The printing head prints along the AB direction after sand spreading on one layer. After printing once, the material-dropping guide rail 5 moves for a certain distance along the CD direction, and the printing head continues to print, and this cycle is repeated until one layer is printed. After a printing cycle is completed, the lifting mechanism 19 drives the movable bottom plate of working box 7 to drop a height, and continues to repeat the material spreading and printing cycle. This is repeated until the end of the printing task. When the printing task is completed, the material-dropping mechanism 8 and the printing mechanism 10 return to the cleaning position 3, open the upper cover 21 of the outer protection, preliminarily remove the redundant raw materials and take out the printed products. The excess bulk material is further removed on the cleaning platform.

The present application further provides a sand supply device.

The existing 3D printing device is of factory design, which requires a huge sand supply pipeline to be connected with the 3D printing device. The sand supply pipeline is fixed and occupies a large space, which is suitable for large-scale production, but it is very inconvenient when doing experiments or small-scale or setting in ordinary rooms. In view of the shortcomings of the prior art, the present application provides a sand supply device and a 3D printing device. A technical problem solved by one aspect of the present application is to provide a sand supply device suitable for experiments or small-scale or working in ordinary rooms.

A technical solution adopted by the present application to solve its technical problems is :
A sand supply device, including a frame, a raw material bin arranged on the frame, a material conveying device, a quota device, a mixing device and a buffer device which are arranged on the frame. The raw material bin is communicated with a quota device through a material conveying device, the quota device is communicated with the mixing device, and the buffer device is communicated with the mixing device.

The sand supply device is simplified and reduced to the frame, and all devices (except the raw material bin) are integrated together to complete sand mixing in a small space, and sand can be transported to the 3D printing device. The whole device (except the raw material bin) is integrated on the frame to realize the layout in a small space. This set of sand supply device is generally set above the 3D printing device to facilitate the flow of materials from top to bottom. Now, this set of sand supply is set on the side of the 3D printing device to reduce the height of the overall equipment and realize the layout of small space. In one of the preferred embodiments, the raw material bin is arranged outside the frame. This helps to reduce the mounting height of the frame. The granular material in the raw material bin, generally sand, is transported to the quota device through the material conveying device. The quota device weighs a set amount of particulate matter, and there is also a matching liquid weighing device. The matched liquid and weighed particulate matter are transferred to a mixing device, the particulate matter and liquid are uniformly mixed in the mixing device, and then the mixed raw materials are transferred to a buffer device to provide raw materials for additive manufacturing equipment.

Preferably, the quota device is arranged at the upper part of the frame, and after passing through the frame, it is connected with the mixing device in the frame. A buffer device communicated with the mixing device is provided at the lower part of the mixing device. A raw material bin is provided at the lower part of the buffer device, and the raw material bin is arranged at the lower part of the frame.

The raw material bin, conveying device, quota device, mixing device and buffer device are all set on the frame, so as to realize the convenience of overall movement, experiment or transfer, and maximize the use of space. In general, the raw material bin contains more materials, so it is set at the bottom to facilitate feeding. Then, the material is transferred to the quota device through the conveying device, and the quota device is set at the top to ensure the weighing accuracy and facilitate the smooth flow and transfer of subsequent materials from top to bottom. The middle space just accommodates the mixing device to realize uniform mixing of materials. The overall layout is compact and the design is scientific, which maximizes the use of space and saves the occupied space.

Preferably, the material conveying device is at least one of a negative pressure suction device, a vacuum suction device or a stirring wheel conveying device.

Materials are transported from bottom to top by using a material conveying device. In order to improve efficiency and have less shape limitation, negative pressure suction or vacuum suction is generally adopted for transfer. In order to simplify the structure and weight, the form of stirring wheel transportation will be selected. In short, the appropriate way is selected to transfer materials from the raw material bin to the quota device.

Preferably, the sand supply device further includes a mobile device, the mobile device is arranged at the bottom of at least one of the frame or the raw material bin, and drives at least one of the frame or the raw material bin to move.

In order to move more conveniently, mobile devices can be arranged at the lower parts of the frame and the raw material bin, that is, convenient moving devices such as rails or pulleys can be arranged to make the frame move conveniently, or facilitate the raw material bin to enter and exit the frame.

Preferably, the mixing device includes a barrel body and a mixing device, the mixing device is arranged in the barrel body, and the bottom surface of the barrel body is an inclined plane inclined to the material outlet, and the material outlet is communicated with the buffer device.

The bottom surface of the mixing device is arranged to incline to the material outlet, so as to facilitate the flow of materials to the buffer device, to completely empty the mixed materials, and to make the material transfer more quickly.

Preferably, the raw material bin is divided into at least two independent spaces with openings upward.

Old sand and new sand are stored in the raw material bin. When the additive manufacturing and printing work is carried out, the new sand and the old sand are mixed for use, which can save the cost. The new sand and the old sand can be stored in the raw material bin after being mixed, or the raw material bin can be divided into two spaces, where the new sand and the old sand are directly stored separately, and then transported to the quota device according to the proportion, thus completing the mixing work.

Preferably, the space of the raw material bin is a conical space with a small bottom and a large top, and one end of the material conveying device is arranged at the bottom of the conical space of the raw material bin.

In order to cooperate with the conveying device and transfer the particulate matter in the raw material bin as completely as possible, the space of the raw material bin is designed as a cone, so that with the decrease of materials, the materials can automatically slide down and then enter the conveying device, thus realizing the complete material transfer as far as possible.

Preferably, the frame includes a frame body and a position-limiting block, where the cooperation position of the frame body and the raw material bin is open at one side, and the opening is used for the raw material bin to enter and exit the frame body, and a position-limiting block is arranged on the frame body on the opposite side of the opening, and is in elastic contact with the raw material bin and made of flexible elastic material.

The raw material bin is designed as a push-pull drawer, which goes in and out of the frame. Because the weight of the raw material bin is heavy, in order to protect the frame, the position-limiting block is designed and made of elastic material, which plays a buffering role when the raw material bin goes in and out of the frame.

Preferably, the frame further includes guide wheels which are arranged on two sides of that opening of the frame body, the guide wheels are in contact with the raw material bin, and the rotating direction of the guide wheel match the direction of the raw material bin entering and leaving the frame body.

In order to facilitate the entry and exit of the raw material bin into and out of the frame, the guide wheels on both sides are designed to play a guiding role, which makes the heavy raw material bin more quickly and safely located.

Preferably, the sand supply device further includes a liquid quota device. The liquid quota device is arranged on one side of the mixing device, and the liquid quota device is communicated with the mixing device.

The liquid quota device provides liquid for the mixing device to be mixed with the particulate matter in the raw material bin.

A 3D printing device includes the sand supply device described in any one of the above.

According to the above technical solution, one beneficial effect brought by one aspect disclosed in the present application is that the whole sand supply device is simple, convenient to move, and suitable for experiments or small-scale 3D printing device.

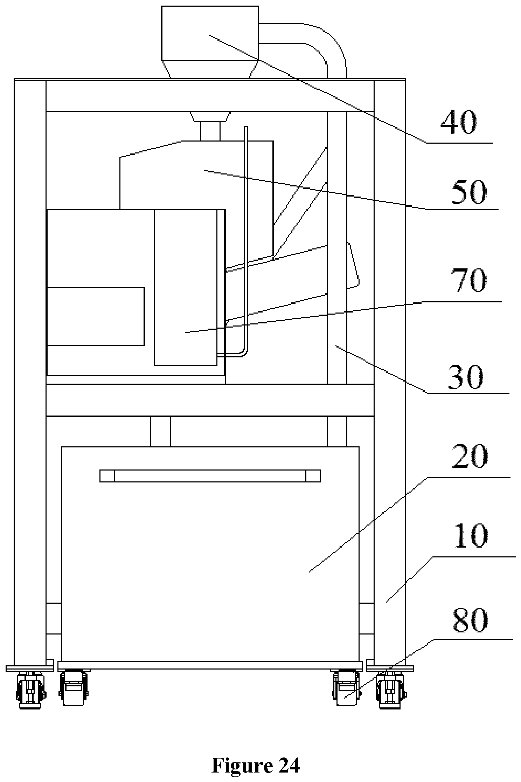

In a specific embodiment, referring to Figure 23 and Figure 24, a sand supply device, including a frame 10 and a raw material bin 20, a material conveying device 30, a quota device 40, a mixing device 50, a buffer device 60, a mobile device 80 and a liquid quota device 70 arranged on the frame 10.

The raw material bin 20 is communicated with a quota device 40 through a material conveying device 30, the quota device 40 is communicated with the mixing device 50, the liquid quota device 70 is communicated with the mixing device 50, and the buffer device 60 is communicated with the mixing device 50. The quota device 40 is arranged at the upper part of the frame 10, and after passing through the frame 10, it is connected with the mixing device 50 in the frame 10. The liquid quota device 70 is arranged on one side of the mixing device 50. A buffer device 60 communicated with the mixing device 50 is provided at the lower part of the mixing device 50. A raw material bin 20 is provided at the lower part of the buffer device 60, and the raw material bin 20 is arranged at the lower part of the frame 10.

The material conveying device 30 is at least one of a negative pressure suction device, a vacuum suction device or a stirring wheel conveying device.

The mobile device 80 is arranged at the bottom of at least one of the frame 10 or the raw material bin 20, and drives at least one of the frame 10 or the raw material bin 20 to move.

The mixing device 50 includes a barrel body and a mixing device, the mixing device is arranged in the barrel body, and the bottom surface of the barrel body is an inclined plane inclined to the material outlet, and the material outlet is communicated with the buffer device 60.

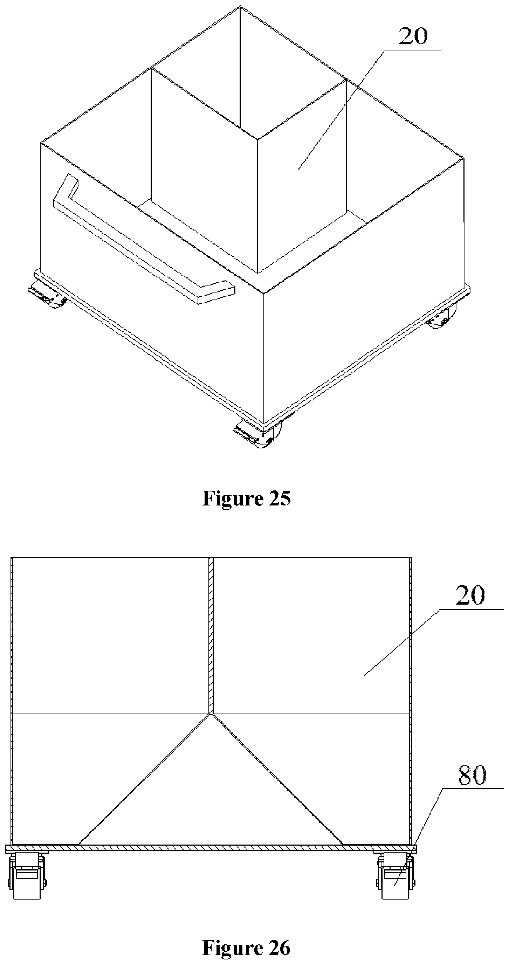

As shown in Figure 25, the raw material bin 20 is divided into at least two independent spaces with openings upward. As another embodiment, referring to Figure 26, the space of the raw material bin 20 is a conical space with a small bottom and a large top, and one end of the material conveying device 30 is arranged at the bottom of the conical space of the raw material bin 20.

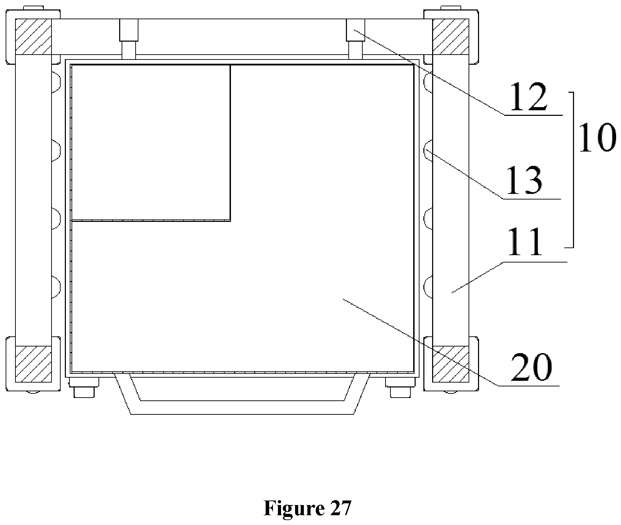

As shown in Figure 27, the frame 10 includes a frame body 11, a position-limiting block 11 and a guide rail 13, where the cooperation position of the frame body 11 and the raw material bin 20 is open at one side, and the opening is used for the raw material bin 20 to enter and exit the frame body 11, and a position-limiting block 12 is arranged on the frame body 11 on the opposite side of the opening, and is in elastic contact with the raw material bin 20 and made of flexible elastic material. Guide wheels 13 are arranged on both sides of the opening of the frame body 11, the guide wheels 13 are in contact with the raw material bin 20, and the rotating direction of the guide wheel 13 matches the direction of the raw material bin 20 entering and leaving the frame body 11.

A 3D printing device includes the above sand supply device.

The above embodiments only express several embodiments of the present application, and their descriptions are specific and detailed, but they cannot be understood as limiting the scope of the present application.

## Claims

1. A 3D printing device, comprising a support frame (4), a printing assembly (10) and a working box mechanism (300) which are integrally arranged on the support frame (4);
the printing assembly (10) comprises symmetrically arranged material-dropping guide rails (5), a plurality of printing guide rails (6), a plurality of material-dropping mechanisms (8) and a plurality of printing mechanisms (10);
the plurality of printing guide rails (6) and the plurality of material-dropping mechanisms (8) are arranged between the two symmetrically arranged material-dropping guide rails (5), at least one printing guide rail (6) is slidably provided with one printing mechanism (10);
at least one crossbeam is arranged between the two material-dropping guide rails (5), and each of the crossbeams is correspondingly mounted with one printing guide rail (6),
the two material-dropping guide rails (5) are arranged on two symmetrical sides of the support frame (4); and
the working box mechanism (300) comprises a working box (310) and a lifting component (320), wherein the lifting component (320) is configured to move a bottom plate of the working box (310) up and down along a vertical direction, and the working box (310) and the lifting component (320) are movably arranged inside the support frame (4),
the working box mechanism (300) further comprises a moving component (350) connected with the lifting component (320) and configured to carry the working box (310) and the lifting component (320), and
the working box (310) and the lifting component (320) are integrally arranged.

2. The 3D printing device according to claim 1, further comprising a cleaning liquid tank (400), wherein the cleaning liquid tank (400) is mounted on the support frame (4) and is close to the printing mechanism (10).

3. The 3D printing device according to claim 1, further comprising a mixing mechanism (500), wherein the mixing mechanism (500) is arranged outside the support frame (4).

4. The 3D printing device according to claim 3, wherein, a buffer silo (600) is further provided on the support frame (4), and the buffer silo (600) is connected with the mixing mechanism (500) and is configured to feed the material-dropping mechanism (8).

5. The 3D printing device according to claim 3, wherein, the mixing mechanism (500) comprises a frame, a raw material bin (20), a material conveying device (30), a quota device (40), a mixing device (50) and a buffer device (60) which are arranged on the frame; and
the raw material bin (20) is in communication with a quota device (40) through the material conveying device (30), the quota device (40) is in communication with the mixing device (50), and the buffer device (60) is in communication with the mixing device (50).

6. The 3D printing device according to claim 5, wherein, the quota device (40) is arranged at an upper part of the frame, and after passing through the frame, the quota device (40) is connected with the mixing device (50) in the frame;
the buffer device (60) in communication with the mixing device (50) is provided at a lower part of the mixing device (50);
a raw material bin (20) is provided at a lower part of the buffer device (60), and the raw material bin (20) is arranged at a lower part of the frame.

7. The 3D printing device according to claim 5, further comprising a mobile device (80), wherein the mobile device (80) is arranged at the bottom of at least one of the frame or the raw material bin (20), and is configured to drive at least one of the frame or the raw material bin (20) to move.

8. The 3D printing device according to claim 5, wherein, the frame comprises a frame body (11) and a position-limiting block (12), a cooperation position of the frame body (11) and the raw material bin (20) is open at one side, and the opening is configured to allow the raw material bin (20) to enter and exit the frame body (11), the position-limiting block (12) is arranged on the frame body (11) on an opposite side of the opening, and is in elastic contact with the raw material bin (20) and made of flexible elastic material.

9. The 3D printing device according to claim 1, further comprising a mixing platform provided independently with respect to the support frame (4), wherein the mixing platform comprises a support body (15) and a mixing machine (13) placed on the support body (15), a weighing scale for weighing materials, and a holding cup for storing and transferring the materials.

10. The 3D printing device according to claim 1, further comprising a feeding device (9), wherein the feeding device (9) comprises a storage hopper (31), a feeding upper cover (32) and a valve (32); and
a top end of the storage hopper (31) has an opening, the feeding upper cover (32) is arranged on the top end of the storage hopper (31) and is configured to open or shield the opening, and the valve (32) is sealingly connected to a bottom end of the storage hopper (31) to control feeding.

11. The 3D printing device according to claim 1, further comprising a liquid material system (1), wherein the liquid material system (1) comprises a cleaning liquid barrel, a waste liquid barrel, a resin barrel, a first electromagnetic valve, a second electromagnetic valve, a third electromagnetic valve, a first liquid material pump, a second liquid material pump, a cleaning position, an ink pressing position and a protection position;
the cleaning liquid barrel is connected with a cleaning tank of the cleaning position through the first liquid material pump and the second electromagnetic valve in turn;
the resin barrel is connected with a printing head of the printing mechanism (10) through the second liquid material pump and the third electromagnetic valve in turn; and
waste liquid tanks at the ink pressing position and the protection position are connected with the waste liquid barrel, and a waste liquid tank at the cleaning position is connected with the waste liquid barrel through the first electromagnetic valve.

## Patentansprüche

1. 3D-Druckvorrichtung, umfassend einen Tragrahmen (4), eine Druckanordnung (10) und einen Arbeitskastenmechanismus (300), die einstückig auf dem Tragrahmen (4) angeordnet sind;
wobei die Druckanordnung (10) symmetrisch angeordnete Materialabwurf-Führungsschienen (5), eine Vielzahl von Druckführungsschienen (6), eine Vielzahl von Materialabwurfmechanismen (8) und eine Vielzahl von Druckmechanismen (10) umfasst;
wobei die Vielzahl von Druckführungsschienen (6) und die Vielzahl von Materialabwurfmechanismen (8) zwischen den beiden symmetrisch angeordneten Materialabwurf-Führungsschienen (5) angeordnet sind, wobei mindestens eine Druckführungsschiene (6) verschiebbar mit einem Druckmechanismus (10) versehen ist;
wobei zwischen den beiden Materialabwurf-Führungsschienen (5) mindestens ein Querträger angeordnet ist, und wobei jeder der Querträger entsprechend mit einer Druckführungsschiene (6) versehen ist,
wobei die beiden Materialabwurf-Führungsschienen (5) an zwei symmetrischen Seiten des Tragrahmens (4) angeordnet sind;
wobei der Arbeitskastenmechanismus (300) einen Arbeitskasten (310) und ein Hebebauteil (320) umfasst, wobei die Hubkomponente (320) so konfiguriert ist, dass es eine Bodenplatte des Arbeitskastens (310) entlang einer vertikalen Richtung nach oben und unten bewegt, und wobei der Arbeitskasten (310) und die Hubkomponente (320) beweglich innerhalb des Tragrahmens (4) angeordnet sind;
wobei der Arbeitskastenmechanismus (300) ferner eine bewegliche Komponente (350) umfasst, die mit der Hubkomponente (320) verbunden und so konfiguriert ist, dass sie den Arbeitskasten (310) und die Hubkomponente (320) trägt; und
wobei der Arbeitskasten (310) und die Hubkomponente (320) einstückig angeordnet sind.

2. 3D-Druckvorrichtung nach Anspruch 1, ferner umfassend einen Reinigungsflüssigkeitstank (400), wobei der Reinigungsflüssigkeitstank (400) auf dem Tragrahmen (4) angebracht ist und sich in der Nähe des Druckmechanismus (10) befindet.

3. 3D-Druckvorrichtung nach Anspruch 1, ferner umfassend einen Mischmechanismus (500), wobei der Mischmechanismus (500) außerhalb des Tragrahmens (4) angeordnet ist.

4. 3D-Druckvorrichtung nach Anspruch 3, wobei ferner ein Puffersilo (600) auf dem Tragrahmen (4) vorgesehen ist, wobei das Puffersilo (600) mit dem Mischmechanismus (500) verbunden und so konfiguriert ist, dass es den Materialabwurfmechanismus (8) versorgt.

5. 3D-Druckvorrichtung nach Anspruch 3, wobei der Mischmechanismus (500) einen Rahmen, einen Rohmaterialbehälter (20), eine Materialfördereinrichtung (30), eine Dosiervorrichtung (40), eine Mischeinrichtung (50) und eine Puffereinrichtung (60) umfasst, die an dem Rahmen angeordnet sind; und
wobei der Rohmaterialbehälter (20) über die Materialfördereinrichtung (30) mit einer Dosiervorrichtung (40) in Verbindung steht, wobei die Dosiervorrichtung (40) mit der Mischeinrichtung (50) in Verbindung steht und die Puffereinrichtung (60) mit der Mischeinrichtung (50) in Verbindung steht.

6. 3D-Druckvorrichtung nach Anspruch 5, wobei die Dosiervorrichtung (40) an einem oberen Teil des Rahmens angeordnet ist, wobei die Dosiervorrichtung (40) nach dem Durchgang durch den Rahmen mit der Mischvorrichtung (50) im Rahmen verbunden ist;
wobei die Puffervorrichtung (60), die mit der Mischvorrichtung (50) in Verbindung steht, an einem unteren Teil der Mischvorrichtung (50) vorgesehen ist;
ein Rohmaterialbehälter (20) an einem unteren Teil der Puffervorrichtung (60) vorgesehen ist und der Rohmaterialbehälter (20) an einem unteren Teil des Rahmens angeordnet ist.

7. 3D-Druckvorrichtung nach Anspruch 5, ferner umfassend eine mobile Vorrichtung (80), wobei die mobile Vorrichtung (80) an dem Boden von mindestens einem des Rahmens oder des Rohmaterialbehälters (20) angeordnet ist und so konfiguriert ist, dass sie mindestens einen des Rahmens oder des Rohmaterialbehälters (20) bewegt.

8. 3D-Druckvorrichtung nach Anspruch 5, wobei der Rahmen einen Rahmenkörper (11) und einen Positionsbegrenzungsblock (12) umfasst, wobei eine Zusammenwirkungsposition des Rahmenkörpers (11) und des Rohmaterialbehälters (20) an einer Seite eine Öffnung aufweist und die Öffnung so konfiguriert ist, dass der Rohmaterialbehälter (20) in den Rahmenkörper (11) eintreten und aus ihm austreten kann, wobei ein Positionsbegrenzungsblock (12) auf dem Rahmenkörper (11) auf einer gegenüberliegenden Seite der Öffnung angeordnet ist und in elastischem Kontakt mit dem Rohmaterialbehälter (20) steht und aus einem flexiblen elastischen Material besteht.

9. 3D-Druckvorrichtung nach Anspruch 1,ferner umfassend eine Mischplattform, die unabhängig von dem Tragrahmen (4) bereitgestellt wird, wobei die Mischplattform einen Tragkörper (15), eine Mischmaschine (13), die auf dem Tragkörper (15) platziert ist, eine Waage zum Wiegen von Materialien und einen Haltebecher zum Speichern und Übertragen der Materialien umfasst.

10. 3D-Druckvorrichtung nach Anspruch 1, ferner umfassend eine Zuführvorrichtung (9), wobei die Zuführvorrichtung (9) einen Vorratsbehälter (31), eine obere Zuführabdeckung (22) und ein Ventil (32) umfasst; und
wobei ein oberes Ende des Vorratsbehälters (31) eine Öffnung aufweist, wobei die obere Zuführungsabdeckung (22) auf dem oberen Ende des Vorratsbehälters (31) angeordnet ist und so konfiguriert ist, dass sie die Öffnung öffnet oder abdeckt, und wobei das Ventil (32) abdichtend mit einem unteren Ende des Vorratsbehälters (31) verbunden ist, um die Zuführung zu steuern.

11. 3D-Druckvorrichtung nach Anspruch 1, ferner umfassend ein Flüssigmaterialsystem (1), wobei das Flüssigmaterialsystem (1) einen Reinigungsflüssigkeitsbehälter, einen Abfallflüssigkeitsbehälter, einen Harzbehälter, ein erstes elektromagnetisches Ventil, ein zweites elektromagnetisches Ventil, ein drittes elektromagnetisches Ventil, eine erste Flüssigmaterialpumpe, eine zweite Flüssigmaterialpumpe, eine Reinigungsposition, eine Tintenpressposition und eine Schutzposition umfasst;
wobei der Reinigungsflüssigkeitsbehälter über die erste Flüssigkeitsmaterialpumpe und das zweite elektromagnetische Ventil nacheinander mit einem Reinigungstank der Reinigungsposition verbunden ist;
wobei der Harzbehälter mit einem Druckkopf des Druckmechanismus (10) nacheinander durch die zweite Flüssigmaterialpumpe und das dritte elektromagnetische Ventil verbunden ist; und
wobei Abfallflüssigkeitsttanks an der Tintenpressposition und der Schutzposition mit dem Abfallflüssigkeitsbehälter verbunden sind, und wobei ein Abfallflüssigkeitstank an der Reinigungsposition über das erste elektromagnetische Ventil mit dem Abfallflüssigkeitsbehälter verbunden ist.

## Revendications

1. Dispositif d'impression 3D, comprenant un cadre de support (4), un ensemble d'impression (10) et un mécanisme de boîte de travail (300) qui sont intégralement disposés sur le cadre de support (4) ;
l'ensemble d'impression (10) comprend des rails de guidage de chute de matériau (5) disposés symétriquement, une pluralité de rails de guidage d'impression (6), une pluralité de mécanismes de chute de matériau (8) et une pluralité de mécanismes d'impression (10) ;
la pluralité de rails de guidage d'impression (6) et la pluralité de mécanismes de chute de matériau (8) sont disposés entre les deux rails de guidage de chute de matériau disposés symétriquement (5), au moins un rail de guidage d'impression (6) est pourvu de manière coulissante avec un mécanisme d'impression (10);
au moins une traverse est disposée entre les deux rails de guidage de chute de matériau (5) et chacune des traverses est montée en correspondance avec un rail de guidage d'impression (6),
les deux rails de guidage de chute de matériau (5) sont disposés sur deux côtés symétriques du cadre de support (4) ;
le mécanisme de boîte de travail (300) comprend une boîte de travail (310) et un composant de levage (320), dans lequel le composant de levage (320) est configuré pour déplacer une plaque inférieure de la boîte de travail (310) vers le haut et vers le bas le long d'une direction verticale, et la boîte de travail (310) et le composant de levage (320) sont disposés de manière mobile à l'intérieur du cadre de support (4),
le mécanisme de boîte de travail (300) comprend en outre un composant mobile (350) relié au composant de levage (320) et configuré pour porter la boîte de travail (310) et le composant de levage (320), et
la boîte de travail (310) et l'élément de levage (320) sont intégralement disposés.

2. Dispositif d'impression 3D selon la revendication 1, comprenant en outre un réservoir de liquide de nettoyage (400), dans lequel le réservoir de liquide de nettoyage (400) est monté sur le cadre de support (4) et est proche du mécanisme d'impression (10).

3. Dispositif d'impression 3D selon la revendication 1, comprenant en outre un mécanisme de mélange (500), dans lequel le mécanisme de mélange (500) est disposé à l'extérieur du cadre de support (4).

4. Dispositif d'impression 3D selon la revendication 3, dans lequel un silo tampon (600) est en outre prévu sur le cadre de support (4), et le silo tampon (600) est connecté au mécanisme de mélange (500) et est configuré pour alimenter le mécanisme de chute de matériau (8).

5. Dispositif d'impression 3D selon la revendication 3, dans lequel le mécanisme de mélange (500) comprend un châssis, un bac à matières premières (20), un dispositif de transport de matériaux (30), un dispositif de quota (40), un dispositif de mélange (50) et un dispositif tampon (60) qui sont disposés sur le cadre ; et
le bac à matières premières (20) est en communication avec un dispositif de quota (40) via le dispositif de transport de matériaux (30), le dispositif de quota (40) est en communication avec le dispositif de mélange (50) et le dispositif tampon (60) est en communication avec le dispositif de mélange (50).

6. Dispositif d'impression 3D selon la revendication 5, dans lequel le dispositif de quota (40) est disposé àune partie supérieure du cadre, et après avoir traversé le cadre, le dispositif de quota (40) est connecté au dispositif de mélange (50) dans le cadre;
le dispositif tampon (60) en communication avec le dispositif de mélange (50) est disposé au niveau d'une partie inférieure du dispositif de mélange (50) ;
un bac à matières premières (20) est disposé au niveau d'une partie inférieure du dispositif tampon (60), et le bac à matières premières (20) est disposé au niveau d'une partie inférieure du cadre.

7. Dispositif d'impression 3D selon la revendication 5, comprenant en outre un dispositif mobile (80), dans lequel le dispositif mobile (80) est disposé au fond d'au moins l'un du cadre ou du bac à matières premières (20), et est configuré pour entraîner au moins l'un du cadre ou du bac à matières premières (20)à se déplacer.

8. Dispositif d'impression 3D selon la revendication 5, dans lequel le cadre comprend un corps de cadre (11) et un bloc de limitation de position (12); une position de coopération du corps de cadre (11) et du bac de matières premières (20) est ouvert d'un côté, et l'ouverture est configurée pour permettre au bac à matières premières (20) d'entrer et de sortir du corps de cadre (11); un bloc de limitation de position (12) est disposé sur le corps de cadre (11) sur un côté opposé de l'ouverture, et est en contact élastique avec le bac à matières premières (20) et est constitué d'un matériau élastique flexible.

9. Dispositif d'impression 3D selon la revendication 1, comprenant en outre une plateforme de mélange prévue indépendamment par rapport au cadre support (4), dans lequel la plateforme de mélange comprend un corps de support (15) et une machine de mélange (13) placée sur le corps de support (15), une balance pour peser les matériaux, et une tasse de maintien pour stocker et transférer les matériaux.

10. Dispositif d'impression 3D selon la revendication 1, comprenant en outre un dispositif d'alimentation (9), dans lequel le dispositif d'alimentation (9) comprend une trémie de stockage (31), un couvercle supérieur d'alimentation (22) et une vanne (32) ; et
une extrémité supérieure de la trémie de stockage (31) comporte une ouverture, le couvercle supérieur d'alimentation (22) est disposé sur l'extrémité supérieure de la trémie de stockage (31) et est configuré pour ouvrir ou protéger l'ouverture, et la vanne (32) est relié de manière étanche à une extrémité inférieure de la trémie de stockage (31) pour contrôler l'alimentation.

11. Dispositif d'impression 3D selon la revendication 1, comprenant en outre un système de matériau liquide (1), dans lequel le système de matériau liquide (1) comprend un baril de liquide de nettoyage, un baril de liquide usé, un baril de résine, une première vanne électromagnétique, une deuxième vanne électromagnétique, une troisième vanne électromagnétique, une première pompe à matériau liquide, une deuxième pompe à matériau liquide, une position de nettoyage, une position de pressage d'encre et une position de protection ;
le baril de liquide de nettoyage est relié à un réservoir de nettoyage de la position de nettoyage par l'intermédiaire de la première pompe à matériau liquide et de la deuxième vanne électromagnétique tour à tour ;
le baril de résine est relié à une tête d'impression du mécanisme d'impression (10) par l'intermédiaire de la deuxième pompe à matériau liquide et de la troisième vanne électromagnétiquetour à tour ; et
des réservoirs de liquide usé au niveau de la position de pressage d'encre et de la position de protection sont reliés au baril de liquide usé, et un réservoir de liquide usé au niveau de la position de nettoyage est relié au baril de liquide usé par l'intermédiaire de la première vanne électromagnétique.
